# EUROPEAN PATENT APPLICATION

(11) **EP 4 364 547 A1**
(43) Date of publication of application: **08.05.2024**
(21) Application number: 23207682.8
(22) Date of filing: 03.11.2023
(51) Int. Cl.: A01B 76/00, G06Q 50/02, A01D 41/127, A01F 15/08

(54) **GEOGRAPHICALLY-LINKED FARMING IMAGES AND THE GENERATION THEREOF**

(30) Priority: 03.11.2022 US 202263382121 P
(71) Applicant: Agco Corporation, Duluth, Georgia 30096 (US)
(72) Inventor: KOCH, Jared J, Hesston, 67062 (US); EKHOLM, Joshua, Hesston, 67062 (US)
(74) Representative: AGCO Intellectual Property Department

(57) **Abstract**

Described herein are advance geographically-linked farming images. In some embodiments, a system includes a location tracking system configured to capture a geographic location of a farming machine while it is in a crop field. The system also includes a camera of the machine configured to capture an image of a farming situation. The system also includes a sensor of the machine configured to capture farming information. The farming information includes at least one of an operational state or setting of the farming machine or a farming condition. And, the system also includes a computing system configured to link the farming information and the geographic location of the machine to the image. In some embodiments, the linking includes advance geo-tagging. Also, the capturing of the image, the location and the farming information can occur at the same time.

## Description

### TECHNICAL FIELD

The present disclosure relates to systems for tracking crops, farming conditions, and operational parameters of farming equipment.

### BACKGROUND

Precision agriculture or precision farming is a farming management model based on measuring and responding to inter and intra-field variability in crops and farming conditions. Also, tracking operational parameters of farming equipment can be applied to the farming management model. The goal of precision agriculture research is to define a decision support system (DSS) for farming management to enhance returns and increase preservation of resources. Specifically, the precision in responses to variability in farming can be improved when known and predetermined farming information is processed and organized to enhance the information and then used to assist in the control and management of farming. Although precision farming can enhance returns and increase preservation of resources, it can complicate farming information systems especially when tracking a great amount of variables related to crop yields, crop varieties, crop quality, farming conditions (such as soil conditions and weather patterns), and operational parameters of farming equipment.

Currently, farming management information systems (FMISs) are pervasive in farming and a significant factor in the furthering improvements to precision agriculture. Such information systems can track measuring and responding to inter and intra-field variability in crops, farming conditions, and farming equipment variables as well as enhance DDS for farming management. FMISs allow for new opportunities to improve farming and precision agriculture. However, even though FMISs are improving precision farming, present FMISs have limitations and can be dramatically improved upon considering relatively recent advancements in computer engineering and computer science. One significant problem with previous systems is in the organization of vast amounts of information collected from farming. This can especially be a problem since farming conditions as well as crop and equipment attributes can vary greatly in the farming operations from one field to another.

These are just some of the many issues that can be improved upon in farming, and specifically, in precision agriculture as well as farming information tracking and management.

### SUMMARY

Described herein are technologies for providing advance geographically-linked farming images and the generation thereof. In some embodiments, the technologies generate and provide advance geographically-tagged farming images. Such images can be generated and provided while a farming machine is operating on or moving through a crop field and provide technical solutions to some technical problems in tracking crops, farming conditions, and operational parameters of farming equipment. Also, the techniques disclosed herein provide specific technical solutions to at least overcome the technical problems mentioned in the background section or other parts of the application as well as other technical problems not described herein but recognized by those skilled in the art.

As mentioned in the background section, an example problem with previous FMISs is in the organization of vast amounts of information collected from farming. This can especially be a problem since farming conditions as well as crop and equipment attributes can vary greatly in the farming operations from one field to another. One example solution to these problems, which is described herein, includes capturing images of farming operations and immediately linking such images to immediately identifiable farming information--such as through advance geotagging of the images. The immediate linking of farming information to the images can including linking geographical location information, machine settings information, and real-time identified and determined crop characteristics.

In other words, described herein are advance geographically-linked farming images (e.g., see images 1400 and 1700) and technologies for generating and linking such images. In some embodiments, a system includes a location tracking system (e.g., see location tracking system 240) configured to capture a geographic location (e.g., see GPS coordinates 1312A) of a farming machine (e.g., see farming machines 106, 300, 350, 360, 610, 810, 902, and 920) while it is in a crop field. The system also includes a camera (e.g., see cameras 390, 392, 394, 396, 690, 890, 892, 990, and 992) of the machine (e.g., see farming machine 106) configured to capture an image of a farming situation (e.g., see images 1300, 1500, and 1600). The system also includes a sensor (e.g., see sensors 220, 644, 646, 648, 832, 833, 942, 944, 945, 949 as well as cameras 390, 392, 394, 396, 690, 890, 892, 990, 992) of the machine (e.g., see machine 106) configured to capture farming information (e.g., see farming information 1410). The farming information (see farming information 1410) includes at least one of an operational state or setting of the farming machine (e.g., see machine 106) or a farming condition (such as one or more attributes of a crop or a crop field). And, the system also includes a computing system configured to link the farming information (e.g., see farming information 1410) and the geographic location (e.g., see coordinates 1312A) of the machine to the image. In some embodiments, the linking includes advance geo-tagging (e.g., see advance geotag 1412). Also, the capturing of the image, the location (e.g., see coordinates 1312A) and the farming information (e.g., see farming information 1410) can occur at the same time. Also, in some embodiments, the camera and the sensor are part of the same sensor or the sensor is the camera, and the computing system identifies the farming information within the image (instead of from a different informational source). In such embodiments, the computing system then links the identified farming information to the image as it does in the other mentioned embodiments where the sensor and camera are separate components.

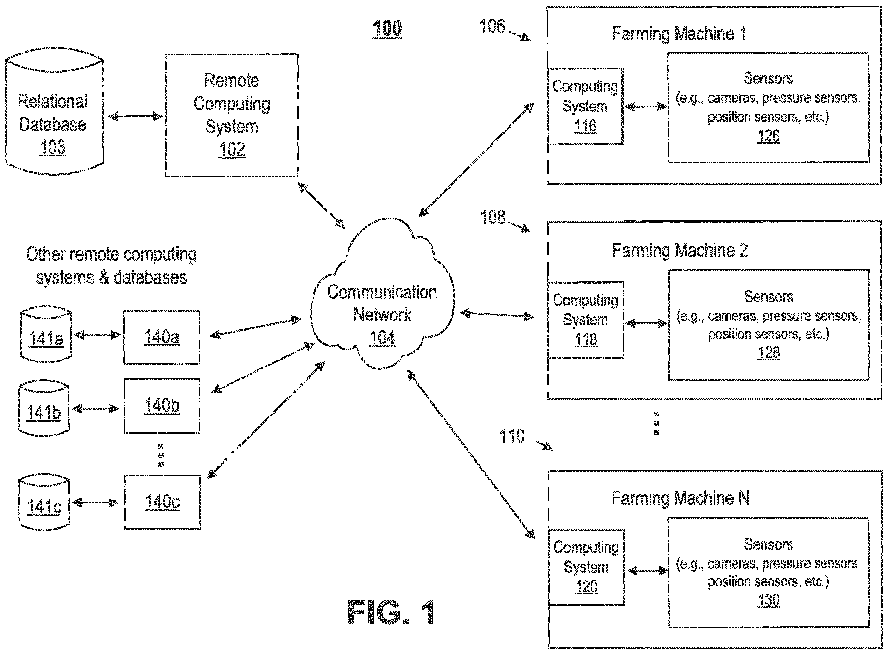

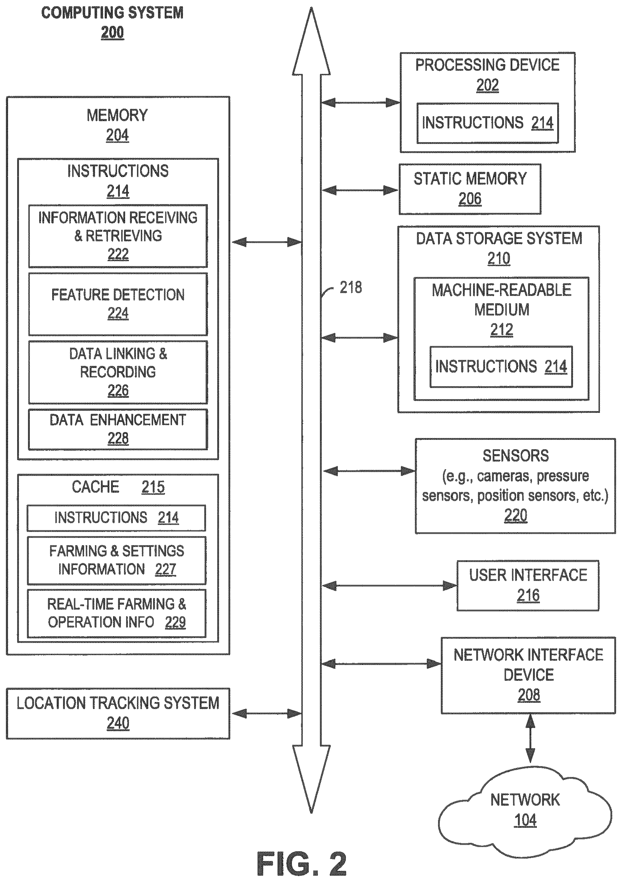

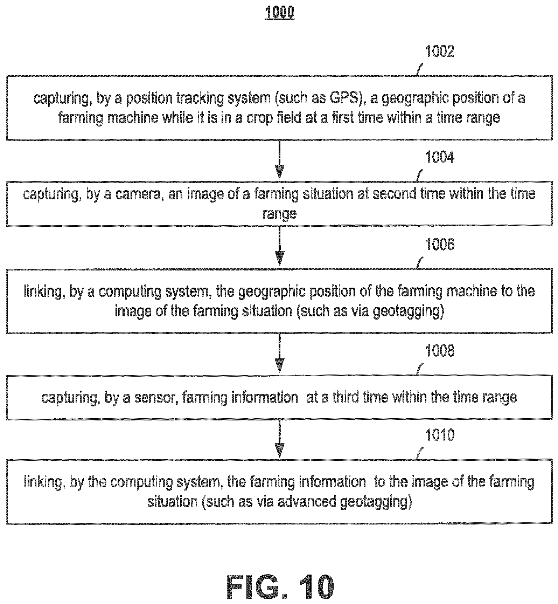

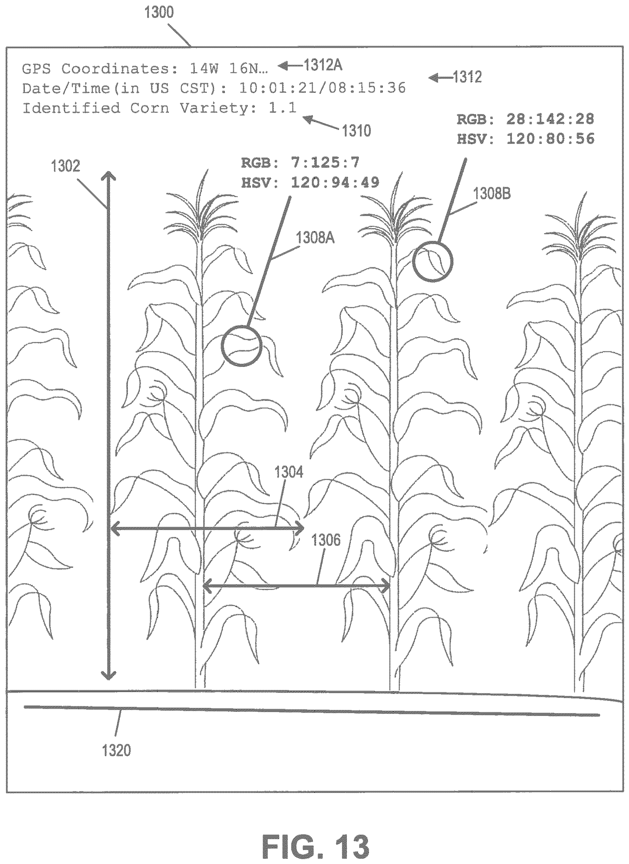

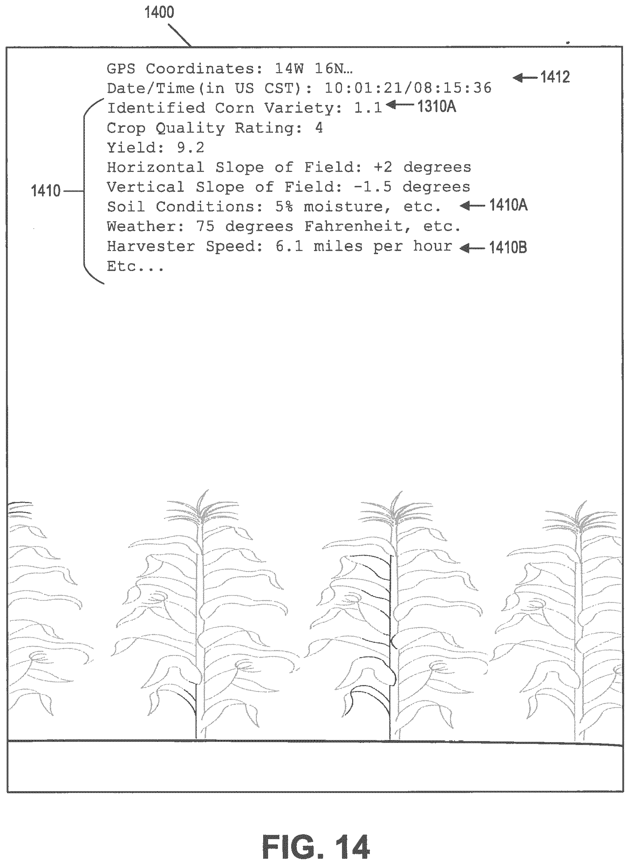

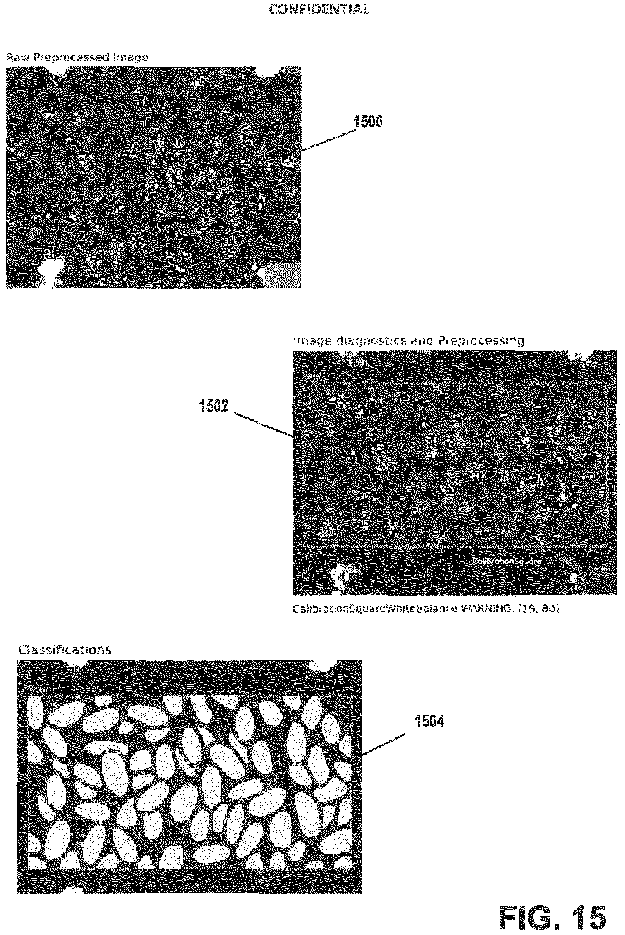

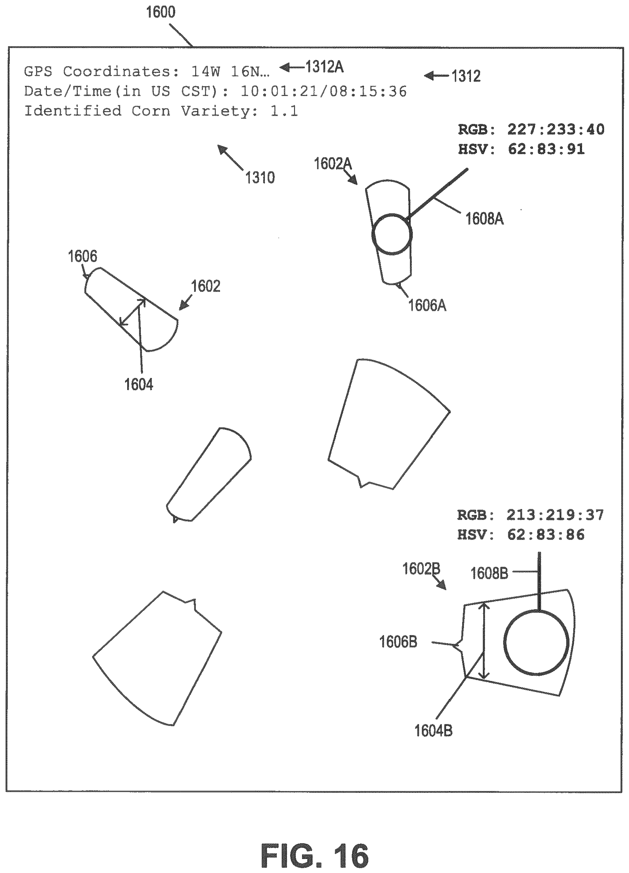

In some embodiments, a method includes capturing, by a location tracking system (e.g., see location tracking system 240 shown in FIG. 2), such as a global positioning system (GPS), a geographic location (e.g., see GPS coordinates 1312A shown in FIG. 13) of a farming machine (e.g., see farming machines 106, 300, 350, 360, 610, 810, 902, and 920 shown in FIGS. 1, 3, 4, 5, 7, and 9 respectively) while it is in a crop field at a first time within a time range (e.g., see step 1002 shown in FIG. 10). The method also includes capturing, by a camera (e.g., see cameras 390, 392, 394, 396, 690, 890, 892, 990, and 992), an image of a farming situation (e.g., see images 1300 and 1600 shown in FIGS. 13 and 16 respectively as well as image stage 1500 shown in FIG. 15) at a second time within the time range (e.g., see step 1004). The method also includes linking, by a computing system (e.g., see computing system 200), the geographic location (e.g., see GPS coordinates 1312A) of the farming machine (e.g., see farming machine 106) to the image of the farming situation (e.g., see step 1006). The method also includes capturing, by a sensor (e.g., see sensors 220, 644, 646, 648, 832, 833, 942, 944, 945, and 949 as well as cameras 390, 392, 394, 396, 690, 890, 892, 990, and 992), farming information (e.g., see farming information 1410 shown in FIG. 14) at a third time within the time range (e.g., see step 1008). The farming information includes at least one of an identified crop (e.g., see variety label 1310), an identified farming condition (e.g., see identified farming condition 1410A) or an identified operational state or setting of the farming machine (e.g., see identified operational state condition 1410B). The identified crop, condition, or state or setting of the machine are identified by the computing system (e.g., see computing system 200). The method also includes linking, by the computing system (e.g., see computing system 200), the farming information (e.g., see identified farming condition 1410A) to the image (e.g., see image 1300, 1500, or 1600) of the farming situation (e.g., see step 1010).

In some embodiments, the farming information (e.g., see farming information 1410) includes information on a crop being harvested or soon to be harvested by the machine and the machine is a harvester (e.g., see combine harvester 300). In some other embodiments, the farming information includes information on crop being processed by the machine and the machine is a combine harvester. In some other embodiments, the farming information includes information on crop being collected or soon to be collected by the machine and the machine is a baler (e.g., see baler 810). In some other embodiments, the farming information includes on crop being processed by the machine and the machine is a baler. In some other embodiments, the farming information includes a condition of a field where a seed is planted or soon to be planted by the machine and the machine is a planter (e.g., see implement 920). In some other embodiments, the farming information includes a state of the machine and the machine is a planter.

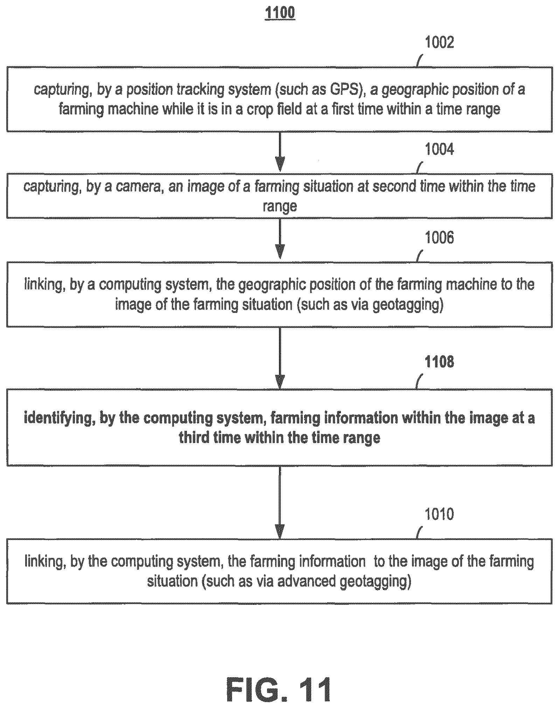

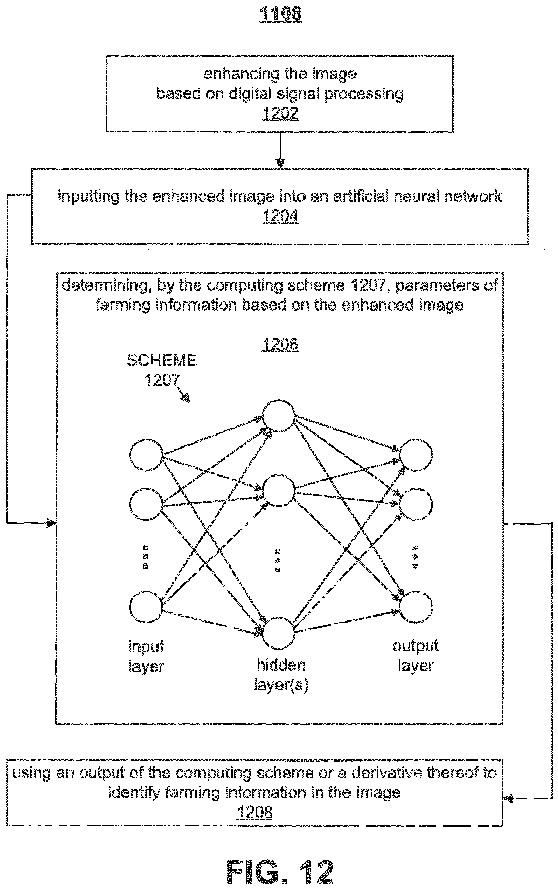

In some embodiments, the camera (e.g., see camera 390) and the sensor are part of the same sensor or are the same sensor, and the computing system (e.g., see computing system 200) identifies the farming information (e.g., see farming information 1410) within the image (such as at step 1108 shown in FIG. 11) as well as links the identified farming information to the image (such as at step 1010 shown in FIGS. 10 and 11). To put it another way, another method (e.g., see method 1100 shown in FIG. 11) can include capturing, such as by a GPS or another type of location tracking system, a geographic location of a farming machine while it is in a crop field at a first time within a time range (e.g., see step 1002) and capturing, by a camera of the machine, an image of a farming situation at a second time within the time range (e.g., see step 1004). The method also includes linking, by a computing system, the geographic location of the farming machine to the image of the farming situation (e.g., see step 1006), identifying, by the computing system, farming information within the image at a third time within the time range (e.g., see step 1108), and linking, by the computing system, the farming information to the image of the farming situation (e.g., see step 1010). In such an alternative method, the farming information also includes at least one of an identified crop, an identified farming condition or an identified operational state or setting of the farming machine. In some of such embodiments, the identifying the farming information (e.g., see farming information 1410 as well as step 1108) includes enhancing the image (e.g., see image stage 1500) based on digital signal processing (e.g., see step 1202 shown in FIG. 12). Also, the identifying the farming information includes inputting the enhanced image (e.g., see image stages 1502 1504 which show enhanced images) into an artificial neural network (e.g., see step 1204). Further, the identifying the farming information includes determining, by a computing scheme (e.g., see computing scheme 1207), parameters of farming information based on the enhanced image (e.g., see step 1206) as well as using an output of the computing scheme or a derivative thereof to identify farming information in the image (e.g., see step 1208).

In some embodiments, the determination of the parameters of the farming information (e.g., see label 1310 and conditions 1410A and 1410B) is based at least on a computer vision analysis (e.g., see step 1206). In some of such examples, the computer vision analysis (e.g., see step 1206) includes inputting aspects of the images (e.g., see image stage 1500) or derivatives of aspects of the images into an artificial neural network (ANN) (e.g., see computing scheme 1207). In some of such examples, the ANN (e.g., see computing scheme 1207) includes or is part of a deep learning process that determines the parameters of the farming information or is a basis for the determination of the parameters. Also, in some of such examples, the deep learning process includes a convolutional neural network (CNN). And, in some of such examples, the deep learning process includes a network of convolutional neural networks (CNNs).

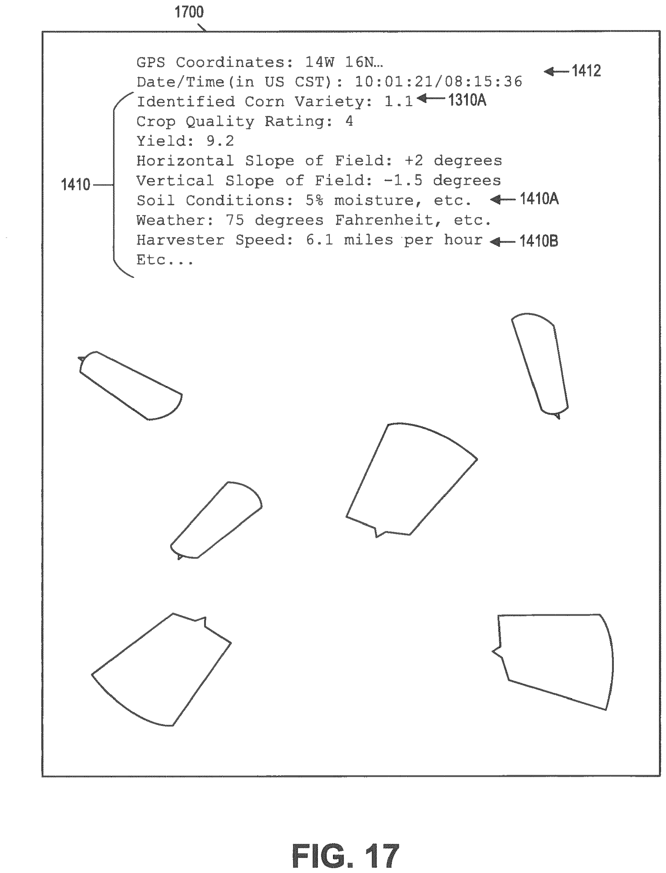

In some embodiments, the linking of the geographic location (e.g., see GPS coordinates 1312A and step 1010) of the farming machine (e.g., see farming machine 106) to the image includes geotagging the image (e.g., see geotag 1312 shown in FIGS. 13 and 16) which includes adding geographical identification metadata to an item including the image. In some embodiments, the metadata can be embedded in the image or the item. And, in some embodiments, the metadata is stored separately and linked to the image or the item. The item can be an image file, an image stream, an image object, etc. Also, in some embodiments, the item is an image file or a video file, or a media feed, or a message file, or another type of item that is configurable to include a digital image. And, in some embodiments, the metadata includes latitude and longitude coordinates, altitude, bearing, distance, accuracy data, a place name, and/or a time stamp. In some of such embodiments, the linking of the farming information (e.g., see farming information 1410) to the image includes adding the identified farming information to the metadata before or after is linked to the image. This makes the geotagging advance geotagging (e.g., see advance geotag 1412 shown in FIGS. 14 and 17).

In some embodiments, the location tracking system (e.g., see location tracking system 240) includes a GPS or is a part of a GPS. In some embodiments, the camera (e.g., see camera 390) is attached to the machine (e.g., see harvester 300). Also, in some embodiments, the time range is less than a second or less than a minute. In some embodiments, the first time, second time, and the third time are in the same instance of time. In some embodiments, the capturing of the image, the location (e.g., see GPS coordinates 1312A) and the farming information (e.g., see farming information 1410) occur at the same time. And, as mentioned, in some embodiments, the linking (such as at step 1010) includes advance geotagging (e.g., see advance geotag 1412).

In some embodiments, the farming machine (e.g., see farming machine 106) is in the farming situation. In some other embodiments, the farming machine is within a certain distance of the farming situation. In some embodiments, the farming situation is within the farming machine. Also, in some embodiments, the farming condition occurs in the machine. In some embodiments, the farming condition occurs within a certain distance of the machine.

In some embodiments, the image includes a crop being harvested or soon to be harvested by the machine and the machine is a harvester (e.g., see combine harvester 300 as well as images 1300 and 1400). In such cases, the computing system (e.g., see computing system 200) identifies the crop and includes the crop in the farming information (e.g., see farming information 1410). The machine can also be a windrower (e.g., see windrower 610), a baler (e.g., see baler 810), a tractor (e.g., see tractors 902 and 360), a planter (e.g., see implement 920), a sprayer, or any other type of agricultural machine or implement used for harvesting crops or other farming tasks. In such embodiments, the camera (e.g., 390) and the sensor can be part of the same sensor or actually be the same sensor. And, in some embodiments, the harvester is a combine harvester (e.g., see harvester 300).In some of such embodiments, the image further includes a condition of the field, and the computing system identifies the condition and includes the condition in the farming information (e.g., see farming information 1410). In some of such embodiments, the condition of the field includes a soil condition (such as moister, dryness, quality, color, texture, density, etc.) or a crop condition (such as moister, dryness, quality, color, texture, density, reflectiveness, etc.). In some of such embodiments, the image further includes a state of the farming machine, and the computing system identifies the state and includes the state in the farming information (e.g., see farming information 1410). In some of such embodiments, the state of the machine includes a machine setting, an alignment of the machine relative to a portion of the field, a load of a part of the machine used in crop harvesting, or a throughput of the machine.

In some embodiments, the image includes a crop being processed or immediately after it has been processed by the machine and the machine is a combine harvester (e.g., see combine harvester 300 as well as images 1600 and 1700), and the computing system (e.g., see computing system 200) identifies the crop and includes the crop in the farming information (e.g., see farming information 1410). In some of such embodiments, the camera and the sensor are a part of the same sensor or are actually the same sensor. In some of such embodiments, the image further includes a state of the machine, and the computing system identifies the state and includes the state in the farming information. In some of such examples, the state of the machine includes a machine setting, a load of a part of the machine used in crop processing, or a throughput of the machine.

In some embodiments, the image includes a condition of the crop in the machine before or after processing by the machine and the machine is a combine harvester (e.g., see combine harvester 300 as well as images 1600 and 1700). And, the computing system (e.g., see computing system 200) identifies the condition and includes the condition in the farming information (e.g., see farming information 1410). In some of such embodiments, the camera and the sensor are a part of the same sensor or are actually the same sensor. In some of such embodiments, a part of the crop is a kernel, a seed, or a berry, and the condition of the crop or the part of the crop includes a shape, a size, a color, a texture, a density, a reflectiveness, or another quality or condition. Also, in such examples, the computing system identifies the condition of the crop or the part of the crop and includes such information in the farming information.

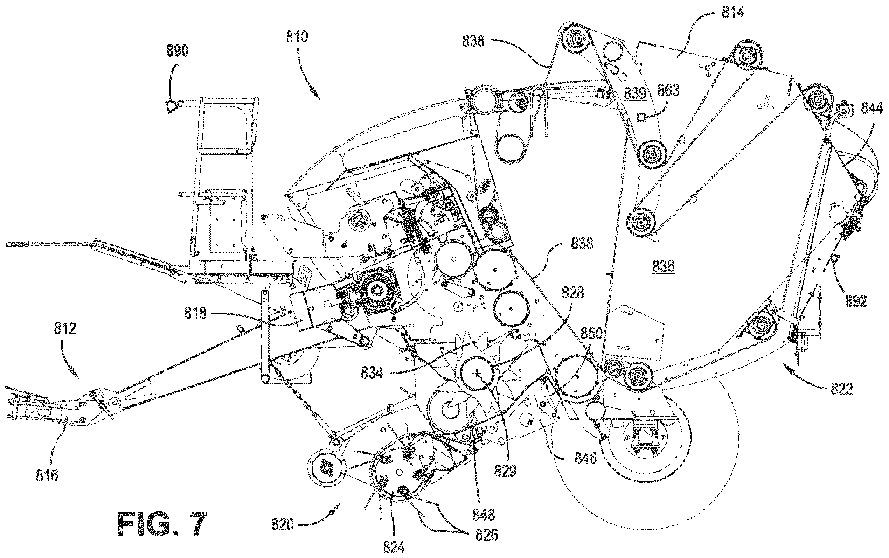

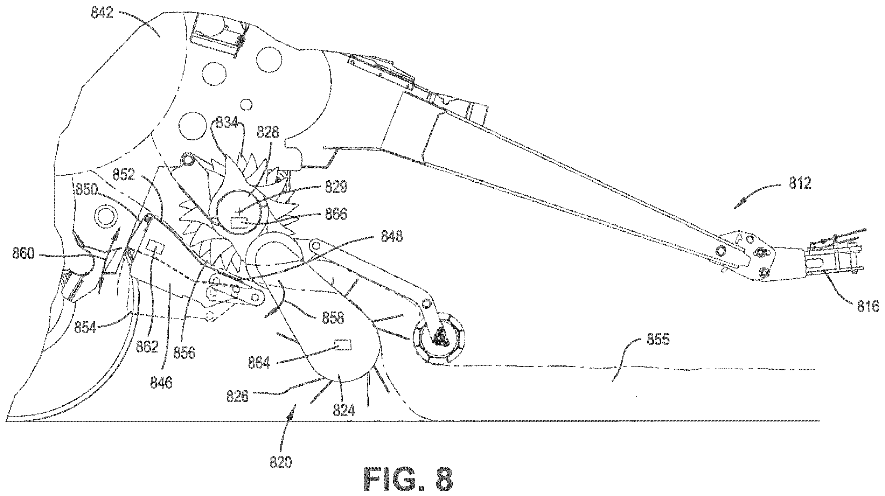

In some embodiments, the image includes crop being collected or soon to be collected by the machine and the machine is a baler (e.g., see baler 810 shown in FIGS. 7 and 8), and the computing system (e.g., see computing system 200) identifies the crop and includes the crop in the farming information. Or, the image includes crop being processed by the machine and the machine is a baler (e.g., see baler 810), and the computing system (e.g., see computing system 200) identifies the crop and includes the crop in the farming information. In some of such embodiments, the camera and the sensor are a part of the same sensor or are actually the same sensor. In some of such embodiments, the image further includes a condition of the field, and the condition of the field includes a soil condition (such as moister, dryness, quality, color, texture, density, etc.) and/or a crop condition (such as moister, dryness, quality, color, texture, density, reflectiveness, etc.). And, the computing system identifies the condition and includes the condition in the farming information. In some of such embodiments, the image further includes a state of the farming machine, and the state of the machine includes a machine setting, an alignment of the machine relative to a portion of the field, a load of a part of the machine used in crop collection, or a throughput of the machine. And, the computing system identifies the state and includes the state in the farming information. In some embodiments, the image further includes a condition of the crop before or after processing, and the condition of the crop includes texture, density, reflectiveness, or another quality, etc. And, the computing system identifies the condition and includes the condition in the farming information.

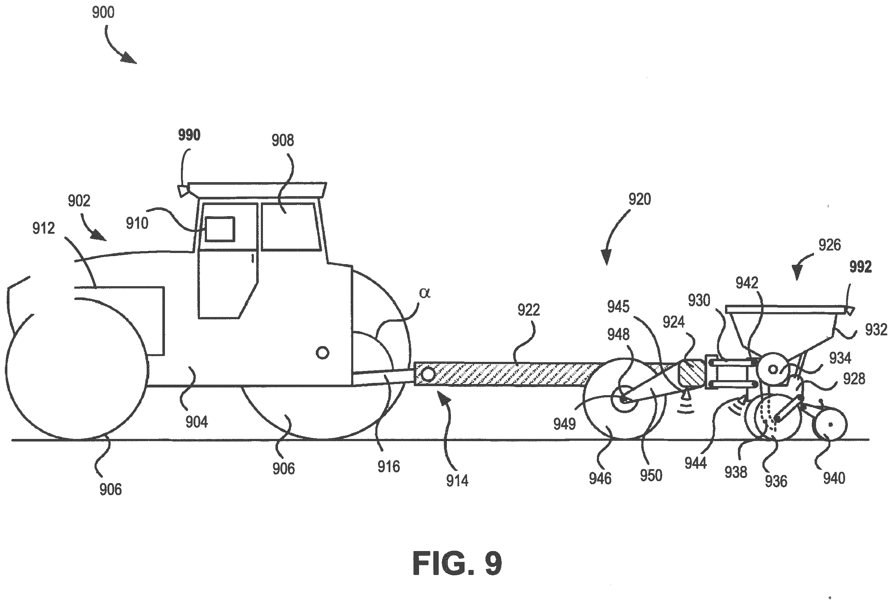

In some embodiments, the image includes a condition of a field where a seed is planted or soon to be planted by the machine and the machine is a planter (e.g., see implement 920 shown in FIG. 9), and the computing system (e.g., see computing system 200) identifies the condition and includes the condition in the farming information. In some of such embodiments, the image further includes a condition of the field, and the condition of the field includes a soil condition (such as moister, dryness, quality, color, texture, density, etc.) and/or a crop condition (such as moister, dryness, quality, color, texture, density, reflectiveness, etc.). In some of such embodiments, the image further includes a state of the machine and the machine is a planter, and the computing system identifies the state and includes the state in the farming information. In some of such embodiments, the state of the machine includes a machine setting, an alignment of the machine relative to a portion of the field, an engine load or a load of a part of the machine used in planting, or a throughput of the machine. In some of such embodiments, the camera and the sensor are a part of the same sensor or are actually the same sensor.

In some embodiments, a system includes a location tracking system (e.g.., see location tracking system 240) configured to capture a geographic location (e.g., see GPS coordinates 1312A) of a farming machine (e.g., see farming machines 106, 300, 350, 360, 610, 810, 902, and 920) while it is in a crop field at a first time within a time range. The system also includes a camera (e.g., see cameras 390, 392, 394, 396, 690, 890, 892, 990, and 992) configured to capture an image of a farming situation (e.g., see images 1300, 1500, and 1600) at a second time within the time range. The system also includes a sensor (e.g., see sensors 220, 644, 646, 648, 832, 833, 942, 944, 945, 949 as well as cameras 390, 392, 394, 396, 690, 890, 892, 990, 992) configured to capture fanning information (e.g., see farming information 1410) at a third time within the time range. And, the system includes a computing system (e.g., see computing system 200) configured to: link the geographic location of the farming machine to the image of the farming situation (e.g., see data linking and recording instructions 226) as well as link the farming information to the image of the farming situation (e.g., see instructions 226). The farming information includes at least one of an identified crop, an identified farming condition or an identified operational state or setting of the farming machine and the identified crop, condition, or state or setting of the machine are identified by the computing system.

In some embodiments of the system, the camera (e.g., see camera 390) and the sensor are part of the same sensor or are the same sensor, and the computing system (e.g., see computing system 200) identifies the farming information (e.g., see farming information 1410) within the image (such as by executing feature detection instructions 224) as well as links the identified farming information to the image (such as by executing instructions 226). In some of such embodiments, the computing system identifies the farming information further by enhancing the image (e.g., see image stage 1500) based on digital signal processing (such as by executing data enhancement instructions 228). Also, the identifying the farming information by the computing system includes inputting the enhanced image (e.g., see image stages 1502 1504 which show enhanced images) into an artificial neural network (such as by executing data enhancement instructions 228). Further, the identifying the farming information by the computing system includes determining, by a computing scheme (e.g., see computing scheme 1207), parameters of farming information based on the enhanced image (e.g., see data enhancement instructions 228) as well as using an output of the computing scheme or a derivative thereof to identify farming information in the image (e.g., see feature detection instructions 224 as well as data enhancement instructions 228). In some embodiments, the determination of the parameters of the farming information by the computing system (e.g., see label 1310 and conditions 1410A and 1410B) is based at least on a computer vision analysis (e.g., see data enhancement instructions 228 as well as feature detection instructions 224 which can be executed to provide the full computer vision analysis). In some of such examples, the computer vision analysis includes inputting aspects of the images or derivatives of aspects of the images into an ANN. In some of such examples, the ANN (e.g., see computing scheme 1207) includes or is part of a deep learning process that determines the parameters of the farming information or is a basis for the determination of the parameters. Also, in some of such examples, the deep learning process includes a CNN. And, in some of such examples, the deep learning process includes a network of CNNs.

The systems and methods described herein overcome some technical problems in farming in general, as well as some technical problems in tracking crops, farming conditions, and operational parameters of farming equipment specifically, by generating and providing advance geographically-linked farming images. Also, the techniques disclosed herein provide specific technical solutions (such as the generation of the advance geographically-linked farming images) to at least overcome the technical problems mentioned in the background section or other parts of the application as well as other technical problems not described herein but recognized by those skilled in the art.

With respect to some embodiments, disclosed herein are computerized methods for generating and providing advance geographically-linked farming images, as well as a non-transitory computer-readable storage medium for carrying out technical operations of the computerized methods. The non-transitory computer-readable storage medium has tangibly stored thereon, or tangibly encoded thereon, computer readable instructions that when executed by one or more devices (e.g., one or more personal computers or servers) cause at least one processor to perform a method for improved systems and methods for generating and providing advance geographically-linked farming images.

With respect to some embodiments, a system is provided that includes at least one computing device configured to provide improved ways for generating and providing advance geographically-linked farming images. And, with respect to some embodiments, a method, such as one of the aforesaid methods, is provided to be performed by at least one computing device. In some example embodiments, computer program code can be executed by at least one processor of one or more computing devices to implement functionality in accordance with at least some embodiments described herein; and the computer program code being at least a part of or stored in a non-transitory computer-readable medium.

These and other important aspects of the invention are described more fully in the detailed description below. The invention is not limited to the particular methods and systems described herein. Other embodiments can be used and changes to the described embodiments can be made without departing from the scope of the claims that follow the detailed description.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The present disclosure will be understood more fully from the detailed description given below and from the accompanying drawings of various embodiments of the disclosure. Embodiments of the invention will now be described, by way of example, with reference to the accompanying drawings, in which:
FIG. 1 illustrates an example network of farming machines that communicate with remote computing systems through a communication network, in accordance with some embodiments of the present disclosure;
FIG. 2 illustrates is a block diagram of example aspects of a computing system (such as one of the computing systems shown in FIG. 1), in accordance with some embodiments of the present disclosure;
FIG. 3 illustrates a schematic side view of a combine harvester (which could be one of the farming machines shown in FIG. 1) with some portions of the harvester being broken away to reveal internal details of construction, in accordance with some embodiments of the present disclosure;
FIG. 4 illustrates the combine harvester of FIG. 3 harvesting crop and transferring a stream of processed crop to a wagon being pulled by a tractor (in which the harvester, the wagon, and the tractor could be some of the farming machines shown in FIG. 1), in accordance with some embodiments of the present disclosure;
FIG. 5 illustrates a perspective view of a windrower (which could be one of the farming machines shown in FIG. 1), in accordance with some embodiments of the present disclosure;
FIG. 6 illustrates a schematic diagram of a control system of the windrower of FIG. 5, in accordance with some embodiments of the present disclosure;
FIG. 7 illustrates a schematic side view of a baler (which could be one of the farming machines shown in FIG. 1), with some portions of the baler being broken away to reveal some internal details of construction, in accordance with some embodiments of the present disclosure;
FIG. 8 illustrates a schematic side views of a part of the baler shown in FIG. 7, with some portions of the baler being broken away to reveal some internal details of construction, in accordance with some embodiments of the present disclosure;
FIG. 9 illustrates a simplified side perspective view of a tractor pulling a planter implement (in which the tractor and the planter implement could be some of the farming machines shown in FIG. 1), in accordance with some embodiments of the present disclosure;
FIGS. 10, 11, and 12 illustrate methods in accordance with some embodiments of the present disclosure;
FIG. 13 illustrates an example image of crops in a field derived from image data, in accordance with some embodiments of the present disclosure;
FIG. 14 illustrates an example image of crops in a field derived from image data that has been advance geotagged, in accordance with some embodiments of the present disclosure;
FIG. 15 illustrates an example image of wheat kernels at three separate stages of image processing in a determination of characteristics of a crop, in accordance with some embodiments of the present disclosure;
FIG. 16 illustrates an example image of corn kernels derived from image data, in accordance with some embodiments of the present disclosure; and
FIG. 17 illustrates an example image of corn kernels derived from image data that has been advance geotagged similarly to the image tagged in FIG. 14, in accordance with some embodiments of the present disclosure.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications and equivalents as will become apparent from consideration of the following detailed description and other parts of this disclosure.

Described herein are technologies for providing advance geographically-linked farming images and the generation thereof. In some embodiments, the technologies generate and provide advance geographically-tagged farming images. Such images can be generated and provided while a farming machine is operating on or moving through a crop field and provide technical solutions to some technical problems in tracking crops, farming conditions, and operational parameters of farming equipment. Also, the techniques disclosed herein provide specific technical solutions to at least overcome the technical problems mentioned in the background section or other parts of the application as well as other technical problems not described herein but recognized by those skilled in the art.

As mentioned in the background section, an example problem with previous FMISs is in the organization of vast amounts of information collected from farming. This can especially be a problem since farming conditions as well as crop and equipment attributes can vary greatly in the farming operations from one field to another. Prior to this disclosure, farmers have been using FMISs along with automation systems of farming equipment that can capture images, process the images locally on the equipment, and output various farming metrics used for control. Not yet well explored but also used, is more advance automated systems using analytics, such as cloud based analytics leveraging machine and deep learning techniques, to provide input to both single farming machines and fleets of machines. One example challenge with the FMISs and the more advance automated systems is that time latencies exist both locally on the machine and in data communications to and from remote computing systems. Thus, a way to limit such latencies that would greatly improve FMISs and more advance automated systems.

One example solution, which is described herein, includes capturing images of farming operations and immediately linking such images to immediately identifiable farming information-- such as through advance geotagging the images. The immediate linking of farming information to the images can include linking geographical location information, machine settings information, and real-time identified and determined crop characteristics. Such advance geographically-linked farming images (e.g., advance geotagged images) can allow farmers to choose to make or not make an adjustment based on the images or some derivative thereof. Also, such advance geographically-linked farming images can assist machine and deep learning techniques that anticipate changes and decisions based on the images, the linked data, and derivatives thereof. Furthermore, such advance geographically-linked farming images can allow for tracking various attributes of crops and parameters of fanning equipment from different zones of a crop field to improve upon agronomic decisions and mapping. Also, beyond mapping and decision by a farming or operator, farming equipment automation can be enhanced or settings for farming equipment operations can be enhanced based on the advance geographically-linked farming images and the linked farming information. Also, the advance geographically-linked farming images can be a basis for mapping of farming information and easy search and sort functionality on the informationally linked or tagged images.

With respect to some embodiments, described herein are advance geographically-linked farming images (e.g., see images 1400 and 1700) and technologies for generating and linking such images. In some embodiments, a system includes a location tracking system (e.g., see location tracking system 240) configured to capture a geographic location (e.g., see GPS coordinates 1312A) of a farming machine (e.g., see farming machines 106, 300, 350, 360, 610, 810, 902, and 920) while it is in a crop field. The system also includes a camera (e.g., see cameras 390, 392, 394, 396, 690, 890, 892, 990, and 992) of the machine (e.g., see farming machine 106) configured to capture an image of a farming situation (e.g., see images 1300, 1500, and 1600). The system also includes a sensor (e.g., see sensors 220, 644, 646, 648, 832, 833, 942, 944, 945, 949 as well as cameras 390, 392, 394, 396, 690, 890, 892, 990, 992) of the machine (e.g., see machine 106) configured to capture farming information (e.g., see farming information 1410). The farming information (see farming information 1410) includes at least one of an operational state or setting of the farming machine (e.g., see machine 106) or a farming condition (such as one or more attributes of a crop or a crop field). And, the system also includes a computing system configured to link the farming information (e.g., see farming information 1410) and the geographic location (e.g., see coordinates 1312A) of the machine to the image. In some embodiments, the linking includes advance geo-tagging (e.g., see advance geotag 1412). Also, the capturing of the image, the location (e.g., see coordinates 1312A) and the farming information (e.g., see farming information 1410) can occur at the same time. Also, in some embodiments, the camera and the sensor are part of the same sensor or the sensor is the camera, and the computing system identifies the farming information within the image (instead of from a different informational source). In such embodiments, the computing system then links the identified farming information to the image as it does in the other mentioned embodiments where the sensor and camera are separate components.

FIG. 1 illustrates a network 100 of farming machines that communicate with remote computing systems through a communications network 104. Specifically, FIG. 1 illustrates the network 100 including a remote computing system 102, the communications network 104, farming machines (e.g., see farming machines 106, 108, and 110), and additional remote computing systems (e.g., see remote computing systems 140a, 140b, and 140c). The remote computing systems (e.g., see remote computing systems 102, 140a, 140b, and 140c) are remote in that each system is physically and geographically separated from the farming machines of the network 100. The farming machines are shown communicating with remote computing systems of the network 100 through a communications network 104. As shown in FIG. 1, the farming machines of the network 100 can each include its own computing system including electronics such as connected sensors, busses, and computers. A computing system of a farming machine can include a processor, memory, a communication interface and one or more sensors that can make the farming machines individual computing devices. In the case of the communications network 104 including the Internet, the farming machines of the network 100 are considered Internet of Things (IoT) devices. Also, in some embodiments, the remote computing systems are a part of a cloud computing system.

As shown in FIG. 1, each one of the farming machines includes a respective computing system and respective electronics (e.g., see computing systems 116, 118, and 120, and see sensors 126, 128, and 130). In some embodiments, the electronics of a farming machine include electronic hardware and software of the farming machine such as sensors and other types of electrical and/or mechanical feedback devices that are communicatively coupled with the computing system of the farming machine. And, in some embodiments, the computing system of the farming machine is configured to connect or integrate with the farming machine electronics and communicate with a remote computing system (such as at least one of the remote computing systems 102, 140a, 140b, and 140c) via the communications network 104.

In some embodiments, the farming machine (e.g., see farming machine 106, 108, or 110) includes a vehicle. In some embodiments, the farming machine is a combine harvester. In some embodiments, the farming machine is a tractor. In some embodiments, the farming machine is a planter. In some embodiments, the farming machine is a sprayer. In some embodiments, the farming machine is a baler. In some embodiments, the farming machine is or includes a harvester, a planter, a sprayer, a baler, any other type of farming implement, or any combination thereof. In such embodiments, the farming machine can be or include a vehicle in that is self-propelling. Also, in some embodiments, the group of similar farming machines is a group of vehicles (e.g., see farming machines 106, 108, and 110). In some embodiments, the group of vehicles is a group of combine harvesters. And, in some embodiments, the group of vehicles is a group of combine harvesters, planters, sprayers, balers, another type of implement, or any combination thereof.

Each of the remote computing systems are connected to or include a relational database, also known as a RDB (e.g., see relational databases 103, 141a, 141b, and 141c). In some embodiments, each one of relational databases is managed by a respective relational database management system (RDBMS). The remote computing systems as well as the local computing systems of the farming machines, such as via a RDB or an RDBMS, are configured to execute instructions to receive and retrieve data from various information captured by sensors of the farming machines (e.g., see sensors 126, 128, and 130 as well as information receiving and retrieving instructions shown in FIG. 2). Such computing systems can also identify additional information (such as specific farming or agricultural information) within or derived from the received or retrieved data (e.g., by executing feature detection instructions 224 and in more advance embodiments also by executing data enhancement instructions 228). The components of the originally received or retrieved data or the further enhanced or derived data can be linked in various ways (such as via image tagging or even advance image tagging) and by executing certain instructions (such as by executing data linking and recording instructions 226). The result of such processes can include the generation of farming, agricultural, and farming machine settings information as well as real-time and historical farming and operations information. The generated information, in some embodiments, can be cached by a computing system and the aforementioned instructions the provide the aforementioned functionality can also be cached by the computing system in various ways to increase computing performance (e.g., see cache 215 of computing system 200 that is configured to cache at least instructions 214, farming and setting information 227, and real-time farming and operation information 229).

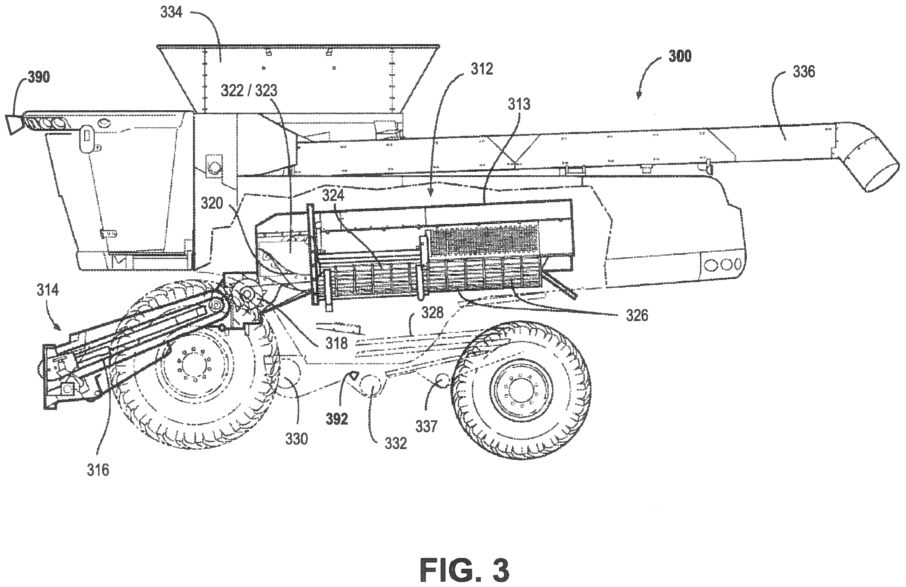

Also, as shown, each farming machine includes sensors (e.g., see sensors 126, 128, and 130) that can possibly implement functionality corresponding to any one of the sensors disclosed herein depending on the embodiment. In some embodiments, the sensors include a camera or another type of optical instrument that implement functionality of a camera in any one of the methodologies described herein. In some embodiments, the sensors include a device, a module, a machine, or a subsystem that detect objects, events or changes in its environment and send the information to other electronics or devices, such as a computer processor or a computing system in general. In some embodiments, the sensors additionally include a position sensor, a linear displacement sensor, an angular displacement sensor, a pressure sensor, a load cell, or any other sensor useable to sense a physical attribute of an agricultural vehicle, or any combination thereof. A more detailed description of examples of such sensors and corresponding machinery is described in FIGS. 3 to 9.

The communications network 104 includes one or more local area networks (LAN(s)) and/or one or more wide area networks (WAN(s)). In some embodiments, the communications network 104 includes the Internet and/or any other type of interconnected communications network. The communications network 104 can also include a single computer network or a telecommunications network. More specifically, in some embodiments, the communications network 104 includes a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

At least each shown component of the network 100 (including remote computing systems 102, 140a, 140b, and 140c, communications network 104, and farming machines 106, 108, and 110) can be or include a computing system which includes memory that includes media. The media includes or is volatile memory components, non-volatile memory components, or a combination of thereof. In general, in some embodiments, each of the computing systems includes a host system that uses memory. For example, the host system writes data to the memory and read data from the memory. The host system is a computing device that includes a memory and a data processing device. The host system includes or is coupled to the memory so that the host system reads data from or writes data to the memory. The host system is coupled to the memory via a physical host interface. The physical host interface provides an interface for passing control, address, data, and other signals between the memory and the host system.

FIG. 2 illustrates is a block diagram of example aspects of a computing system 200, which can be or include any one of the computers or computing systems described herein (e.g., see remote computing system 102 and farming machine computing systems 116, 118, and 120). FIG. 2 illustrates parts of the computing system 200 within which a set of instructions, for causing a machine (such as a computer processor or processing device 202) to perform any one or more of the methodologies discussed herein performed by a computing system, are executed (e.g., see the method steps of method 1000 as well as the method steps of method 1100 shown in FIGS. 10 and 11 respectively). In some embodiments, the computing system 200 operates with additional computing systems (e.g., such as additional remote computing systems 140a, 140b, and 140c) to provide increased computing capacity in which multiple computing systems operate together to perform any one or more of the methodologies discussed herein that are performed by a computing system. In some embodiments, the computing system 200 corresponds to a host system that includes, is coupled to, or utilizes memory or is used to perform the operations performed by any one of the computing systems described herein. In some embodiments, the machine is connected (e.g., networked) to other machines in a LAN, an intranet, an extranet, or the Internet. In some embodiments, the machine operates in the capacity of a server in client-server network environment, as a peer machine in a peer-to-peer (or distributed) network environment, or as a server in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein performed by computing systems.

The computing system 200 includes a processing device 202, a main memory 204 (e.g., read-only memory (ROM), flash memory, dynamic random-access memory (DRAM), etc.), a static memory 206 (e.g., flash memory, static random-access memory (SRAM), etc.), a network interface device 208, a data storage system 210, a user interface 216, and other types of electronics (such as sensors 220), which communicate with each other via a bus 218. The processing device 202 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 202 is one or more special-purpose processing devices such as an application specific integrated circuit (ASIC), a field programmable gate array (FPGA), a digital signal processor (DSP), network processor, or the like. The processing device 202 is configured to execute instructions 214 for performing the operations discussed herein performed by a computing system. In some embodiments, the computing system 200 includes a network interface device 208 to communicate over the communications network 104 shown in FIG. 1.

The data storage system 210 includes a machine-readable storage medium 212 (also known as a computer-readable medium) on which is stored one or more sets of instructions 214 or software embodying any one or more of the methodologies or functions described herein performed by a computing system. The instructions 214 also reside, completely or at least partially, within the main memory 204 or within the processing device 202 during execution thereof by the computing system 200, the main memory 204 and the processing device 202 also constituting machine-readable storage media.

In some embodiments, the instructions 214 include specific instructions to implement functionality described herein related to the methods described herein and that can correspond to any one of the computing devices, data processors, user interface devices, and I/O devices described herein related to a computing system. For example, the instructions 214 include information receiving and retrieving instructions 222, feature detection instructions 224, data linking and recording instructions 226, and data enhancement instructions 228. In some embodiments, the data enhancement instructions 228 include different types of data analysis libraries as well different types of data processing libraries--including various mathematical and statistical modeling and operations libraries and machine learning, artificial intelligence, and deep learning libraries as well as specific libraries for ANN and CNN data processing and for training ANNs, CNNs and other types of computing schemes or systems. In some embodiments, the instructions 214 are cached in the cache 215 just before or while being executed. Also, in some embodiments, farming and settings information 227 and real-time farming and operation information 229 are cached in the cache 215 just before or while being used by the computing system 200. In some instances, the farming and settings information 227 and the real-time farming and operation information 229 are included in the instructions 214 and are stored and/or hosted with the instructions.

While the machine-readable storage medium 212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that cause the machine to perform any one or more of the methodologies of the present disclosure performed a computing system. The term "machine-readable storage medium" shall accordingly be taken to include solid-state memories, optical media, or magnetic media.

Also, as shown, computing system 200 includes user interface 216 that includes a display, in some embodiments, and, for example, implements functionality corresponding to any one of the user interface devices disclosed herein. A user interface, such as user interface 216, or a user interface device described herein includes any space or equipment where interactions between humans and machines occur. A user interface described herein allows operation and control of the machine from a human user, while the machine simultaneously provides feedback information to the user. Examples of a user interface (UI), or user interface device include the interactive aspects of computer operating systems (such as graphical user interfaces), machinery operator controls, and process controls. A UI described herein includes one or more layers, including a human-machine interface (HMI) that interfaces machines with physical input hardware and output hardware.

Also, as shown, the computing system 200 includes farming machine electronics (e.g., see sensors 220) that includes sensors, cameras, or other types of electrical and/or mechanical feedback devices, one or more user interfaces (e.g., any one of the UI described herein such as user interface 216), and any type of computer hardware and software configured to interface and communicatively couple to operational components of a farming machine. Also, in some embodiments, the farming machine electronics as well as the electronics include any one of the cameras described herein for capturing images of crop (e.g., see cameras 390 and 392 of combine harvester 300 show in FIG. 3). Also, as shown, the computing system 200 includes sensors 220 (e.g., also see sensors 126, 128, and 130) that can possibly implement functionality corresponding to any one of the sensors disclosed herein depending on the embodiment. In some embodiments, the sensors 220 include a camera or another type of optical instrument that implement functionality of a camera in any one of the methodologies described herein. In some embodiments, the sensors 220 include a device, a module, a machine, or a subsystem that detect objects, events or changes in its environment and send the information to other electronics or devices, such as a computer processor or a computing system in general. In some embodiments, the sensors 220 additionally include a position sensor, a linear displacement sensor, an angular displacement sensor, a pressure sensor, a load cell, or any other sensor useable to sense a physical attribute of an agricultural vehicle, or any combination thereof. A more detailed description of examples of such sensors and corresponding machinery is described in FIGS. 3 to 9.

Also, as shown, the computing system 200 includes location tracking system 240 that can provide functionality similar to any one of the location tracking systems described herein. In some embodiments, the location tracking system 240 is, includes, or is a part of a GPS.

In some systems of the technologies disclosed herein, any steps of embodiments of the methods described herein are implementable by executing instructions corresponding to the steps, which are stored in memory (e.g., see instructions 214, 222, 224, 226, and 228 shown in FIG. 2).

For example, in some embodiments, a system includes a location tracking system (e.g.., see location tracking system 240) configured to capture a geographic location (e.g., see GPS coordinates 1312A) of a farming machine (e.g., see farming machines 106, 300, 350, 360, 610, 810, 902, and 920) while it is in a crop field at a first time within a time range. The system also includes a camera (e.g., see cameras 390, 392, 394, 396, 690, 890, 892, 990, and 992) configured to capture an image of a farming situation (e.g., see images 1300, 1500, and 1600) at a second time within the time range. The system also includes a sensor (e.g., see sensors 220, 644, 646, 648, 832, 833, 942, 944, 945, 949 as well as cameras 390, 392, 394, 396, 690, 890, 892, 990, 992) configured to capture farming information (e.g., see farming information 1410) at a third time within the time range. And, the system includes a computing system (e.g., see computing system 200) configured to: link the geographic location of the farming machine to the image of the farming situation (e.g., see data linking and recording instructions 226) as well as link the farming information to the image of the farming situation (e.g., see instructions 226). The farming information includes at least one of an identified crop, an identified farming condition or an identified operational state or setting of the farming machine and the identified crop, condition, or state or setting of the machine are identified by the computing system.

In some embodiments of the system, the camera (e.g., see camera 390) and the sensor are part of the same sensor or are the same sensor, and the computing system (e.g., see computing system 200) identifies the farming information (e.g., see farming information 1410) within the image (such as by executing feature detection instructions 224) as well as links the identified farming information to the image (such as by executing instructions 226). In some of such embodiments, the computing system identifies the farming information further by enhancing the image (e.g., see image stage 1500) based on digital signal processing (such as by executing data enhancement instructions 228). Also, the identifying the farming information by the computing system includes inputting the enhanced image (e.g., see image stages 1502 1504 which show enhanced images) into an artificial neural network (such as by executing data enhancement instructions 228). Further, the identifying the farming information by the computing system includes determining, by a computing scheme (e.g., see computing scheme 1207), parameters of farming information based on the enhanced image (e.g., see data enhancement instructions 228) as well as using an output of the computing scheme or a derivative thereof to identify farming information in the image (e.g., see feature detection instructions 224 as well as data enhancement instructions 228). In some embodiments, the determination of the parameters of the farming information by the computing system (e.g., see label 1310 and conditions 1410A and 1410B) is based at least on a computer vision analysis (e.g., see data enhancement instructions 228 as well as feature detection instructions 224 which can be executed to provide the full computer vision analysis). In some of such examples, the computer vision analysis includes inputting aspects of the images or derivatives of aspects of the images into an ANN. In some of such examples, the ANN (e.g., see computing scheme 1207) includes or is part of a deep learning process that determines the parameters of the farming information or is a basis for the determination of the parameters. Also, in some of such examples, the deep learning process includes a CNN. And, in some of such examples, the deep learning process includes a network of CNNs.

FIG. 3 illustrates a schematic side view of a combine harvester 300 (which can be one of the farming machines shown in FIG. 1) with some portions of the harvester being broken away to reveal internal details of construction. Some embodiments of a farming machine described herein include the combine harvester 300 or any other type of harvester. It is to be understood that, in general, any of the farming machines described herein can also include mechanical and operational parts to the level of specificity as provided herein for the harvester 300. However, for the sake of conciseness, such specificity may not be provided for all of the types of farming machines described herein. For example, wherein the farming machine is a sprayer, details are not provided. Further, it is to be understood that the sensed or captured parameters of crop fields, crops, and farming machines described herein with respect to the methods and systems described herein can include the sensed and captured parameters of the harvester 300 or of any other type of farming machine described herein.

As shown in FIG. 3, the combine harvester 300 includes at least two cameras (e.g., see cameras 390 and 392). The at least two cameras include a first camera 390 mounted to the harvester 300 at a front end of the harvester. The first camera 390 is configured to capture images of crop while the crop is being harvested or just before the crop is harvested (e.g., see images 1300 and 1400 shown in FIGS. 1300 and 1400 respectively). The at least two cameras also include a second camera 392 mounted to the combine harvester 300 in a crop processing section of the harvester. For example, the second camera 392 is mounted near the clean grain auger 332 that delivers the clean grain to an elevator (not shown) that elevates the grain to a storage bin 334 on top of the combine harvester 300, from which it is ultimately unloaded via an unloading spout 336. The second camera 392 is configured to capture images of crop after the crop has been harvested. Also, in some instances, such as the one shown in FIG. 3, the second camera 392 is configured to capture images of the crop after the crop has been processed to at least some extent by the combine harvester 300 (e.g., see the images shown in FIGS. 15, 16, and 17, respectively).

It is to be understood that the cameras of the harvester 300 (e.g., see cameras 390 and 392) are positioned near various parts of the harvester (whether it is a combine harvester or a forage harvester) to capture images of the crop as it is harvested or processed or to capture images of operating parts of the harvester. And, it is to be further understood that the captured images described with respect to the methods and systems described herein can include such images.

Also, the combine harvester 300 has processing system 312 that extends generally parallel with the path of travel of the harvester. It is to be understood that such a harvester is being used to illustrate principals herein and the subject matter described herein is not limited to harvesters with processing systems designed for axial flow, nor to axial flow harvesters having only a single processing system. The combine harvester 300 also includes a harvesting header (not shown) at the front of the machine that delivers collected crop materials to the front end of a feeder house 314. Such materials are moved upwardly and rearwardly within feeder house 314 by a conveyer 316 until reaching a beater 318 that rotates about a transverse axis. Beater 318 feeds the material upwardly and rearwardly to a rotary processing device, in the illustrated instance to a rotor 322 having an infeed auger 320 on the front end thereof. Infeed auger 320, in turn, advances the materials axially into the processing system 312 for threshing and separating. The processing system 312 is housed by processing system housing 313. In other types of systems, conveyer 316 may deliver the crop directly to a threshing cylinder. The crop materials entering processing system 312 can move axially and helically therethrough during threshing and separating. During such travel, the crop materials are threshed and separated by rotor 322 operating in chamber 323 which concentrically receives the rotor 322. The lower part of the chamber 323 contains concave assembly 324 and a separator grate assembly 326. Rotation of the rotor 322 impels the crop material rearwardly in a generally helical direction about the rotor 322. A plurality of rasp bars and separator bars (not shown) mounted on the cylindrical surface of the rotor 322 cooperate with the concave assembly 324 and separator grate assembly 326 to thresh and separate the crop material, with the grain escaping laterally through concave assembly 324 and separator grate assembly 326 into cleaning mechanism 328. Bulkier stalk and leaf materials are retained by the concave assembly 324 and the separator grate assembly 326 and are impelled out the rear of processing system 312 and ultimately out of the rear of the combine harvester 300. A blower 330 forms part of the cleaning mechanism 328 and provides a stream of air throughout the cleaning region below processing system 312 and directed out the rear of the combine harvester 300 so as to carry lighter chaff particles away from the grain as it migrates downwardly toward the bottom of the machine to a clean grain auger 332. Since the grain is cleaned by the blower 330 by the time it reaches the auger 332, in some embodiments the camera for capturing images of the crop is mounted near the auger 332 facing a section that conveys the cleaned grain (e.g., see camera 304). Clean grain auger 332 delivers the clean grain to an elevator (not shown) that elevates the grain to a storage bin 334 on top of the combine harvester 300, from which it is ultimately unloaded via an unloading spout 336. A returns auger 337 at the bottom of the cleaning region is operable in cooperation with other mechanism (not shown) to reintroduce partially threshed crop materials into the front of processing system 312 for an additional pass through the processing system 312. It is to be understood that the cameras of the harvester 300 (e.g., see cameras 390 and 392) are positioned near such parts of the harvester (such as near parts of the processing system 312) to capture images of the crop as it is harvested or processed or to capture images of such parts of the harvester. And, it is to be further understood that the captured images described with respect to the methods and systems described herein can include such images.

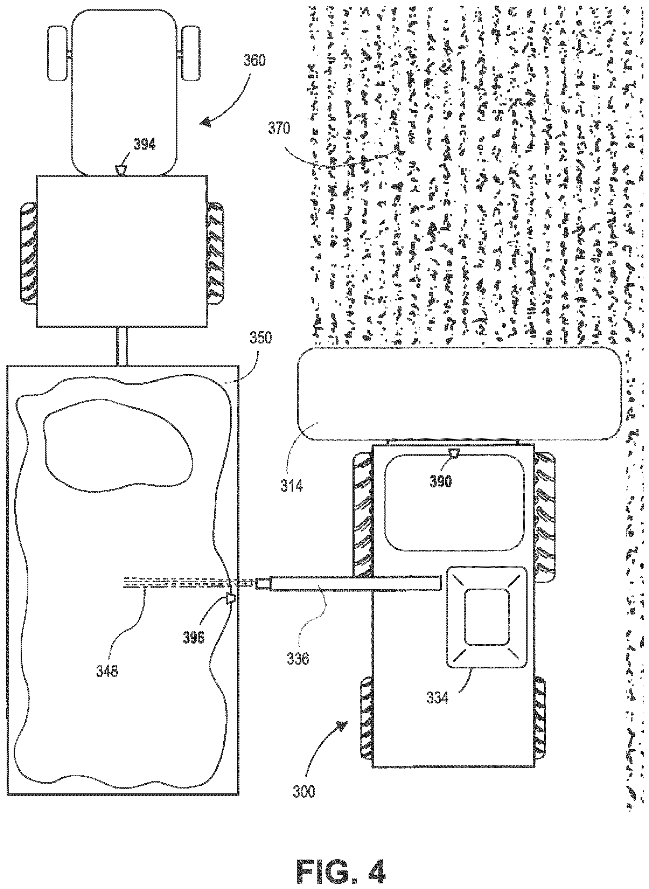

FIG. 4 illustrates the harvester 300, shown in FIG. 3, harvesting crop 370 and transferring a stream of processed crop 348 to a wagon 350 pulled by a tractor 360. As mentioned, the harvester 300 is a combine harvester but it could be a forage harvester in some embodiments, such as self-propelled forage harvester. The harvester 300 connects to a header (which includes feeder house 314) suitable for harvesting crop 370. In the case of a forage harvester, the header is provided for severing or picking up the crop off the ground and directing it to a series of feed rollers that compact the raw crop material and advance it to one or more chopping drums. The chopped crop material follows a drum floor to roller crackers that crack grain kernels. From there the processed crop material is blown by an unload conveyor through a discharge chute (e.g., see unloading spout 336 which is a part of the chute) into a receiving vehicle or a wagon, such as a wagon 350 pulled by a tractor, such as tractor 360. An analogous arrangement for the combine harvester 300 harvests, processes, and disposes the processed crop into the wagon 350 (e.g., see FIG. 3 for more details on the parts of the harvester 300 and how the crop is processed by it). In such arrangements, one or more cameras (e.g., see camera 392 shown in FIG. 3) can be positioned near various parts of the arrangements (whether for a forage harvester arrangement or a combine harvester arrangement) to capture images of the crop as it is harvested or processed or to capture images of operating parts of the harvester. And, the captured images described with respect to the methods and systems described herein can include such images.

In operation, the combine harvester 300 (or, for example, a forage harvester) advances through a field cutting the crop 370 standing in the field and processes the crop as explained herein. The processed crop is transferred from the harvester 300 to the wagon 350 by way of the discharge chute (e.g., see unloading spout 336 which is a part of the chute). A stream of processed crop 348 is blown through the chute into the wagon 350. The tractor 360 and wagon 350 follow the harvester 300 through the field, and as these farming machines move through the field one or more cameras (e.g., see cameras 390, 394, and 396) can be positioned near various parts of the machines (whether or not the harvester is a forage harvester or a combine harvester) to capture images of the field and the crop in the field or to capture images of operating parts of the machines. And, the captured images described with respect to the methods and systems described herein can include such images.

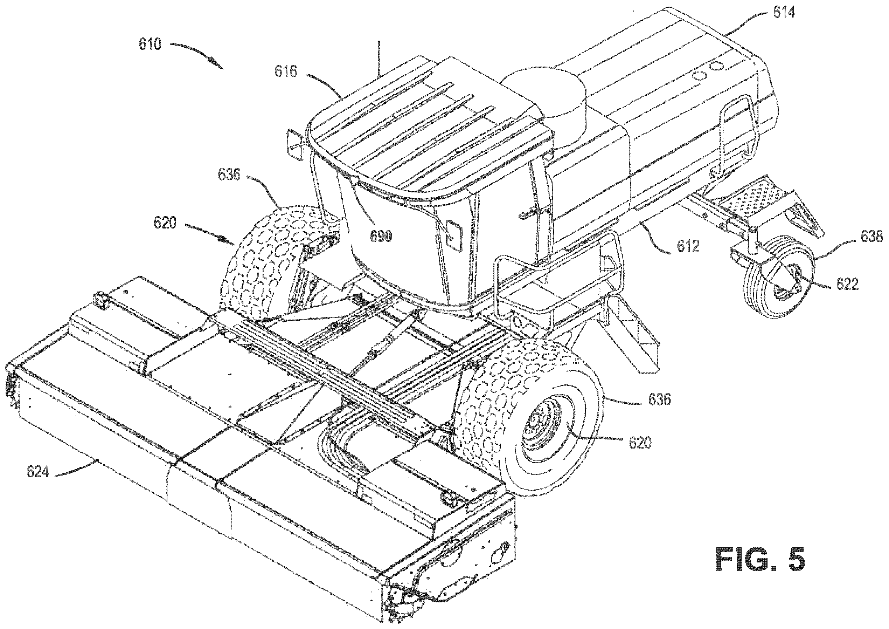

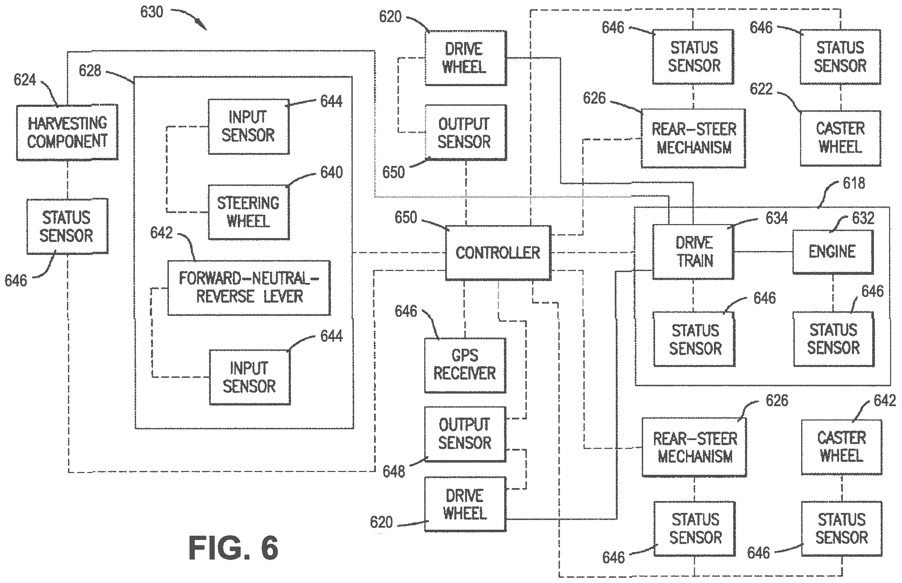

FIGS. 5 and 6 illustrate a dual-path windrower 610 and a control system 630 of the windrower. Some embodiments of a farming machine described herein include the dual-path windrower 610 and its control system 630 or any other type of windrower and its respective control system. It is to be understood that, in general, any of the farming machines described herein can include a control system analogous to the control system 630. However, for the sake of conciseness, control system 630 is the only control system described herein in great detail. Furthermore, although sensors and other parts of the control system 630 are described herein in great detail, it is to be understood that elements of control systems of other types of farming machines could be described herein in great detail but are not for the sake of conciseness. And, it is to be further understood that the sensed or captured parameters of crops and farming machines described herein with respect to the methods and systems described herein can include the sensed and captured parameters of the windrower or of any other type of farming machine described herein.

The dual-path windrower 610 includes a chassis 612, an engine compartment 614, a cab 616, a drive system 618, drive wheels 620, a set of caster wheels 622, a harvesting component 624, a set of rear-steer mechanisms 626, a number of user drive input mechanisms 628, and the control system 630. The chassis 612 supports the engine compartment 614, cab 616, harvesting component 624 and drive system 618 and can include a number of frame rails, cross beams, and other structural members. The chassis 612 can also include a number of mounting bosses or mounting points for mounting the components to the chassis 612. The engine compartment 614 encloses the engine and other components of the drive system 18 and is mounted on the chassis 612 behind the cab 616. The engine compartment 614 can include doors and/or removable access panels for servicing the engine. The drive system 618 powers the drive wheels 620 and the harvesting component 624 and includes an engine 632 and a drive train 634. In some embodiments, the drive system 618 also powers the rear-steer mechanisms 626. The drive train 634 transfers power from the engine 632 to the drive wheels 620 and can include drive shafts, drive belts, gear boxes, and the like. The drive train 634 can also include hydraulic or pneumatic lines, valves, and the like. The drive wheels 620 can be positioned near a front end of the chassis 612 and can support a majority of the weight of the dual-path windrower 610. The caster wheels 622 are small non-driven wheels spaced behind the drive wheels 620 and can include non-drive tires 638 mounted thereon. The non-drive tires 638 can have annular ridges and/or grooves for allowing the non-drive tires 638 to more easily pass over mud, loose dirt, gravel, and other ground conditions. The caster wheels 622 can be configured to swivel about a vertically extending axis in either a free-wheeling mode or a steering mode. The harvesting component 624 cuts and swaths crops into a windrow and can be removably attached to the front end of the chassis 612. The harvesting component 624 can be driven by the drive system 618 via an auxiliary or power take-off (PTO) drive. The rear-steer mechanisms 626 actuate the caster wheels 622 in select situations and can include tie rods, rack-and-pinion mechanisms, hydraulics, pneumatics, rotary motors, or any other suitable actuation components. The user drive input mechanisms 628 allow the driver to provide user drive inputs and can include a steering wheel 640 and a forward-neutral-reverse lever 642. Alternatively, the user drive input mechanisms 628 can include handlebars, an acceleration pedal, a brake pedal, a yoke, a joystick, and other inputs. The user drive input mechanisms 628 can also include virtual controls implemented on a display screen of a computing device. The computing device can be integrated into the dual-path windrower 610 or can be an external device such as a smartphone, tablet, or remote control.

The control system 630 of the dual-path windrower 610 controls the drive system 618, drive wheels 620, harvesting component 624, and rear-steer mechanisms 626 and includes a number of input sensors 644, a number of status sensors 646, a number of output sensors 648, and controller 650. With respect to other control systems of other fanning machines described herein, it is to be understood that, in general, any farming machine described herein can include an analogous control system to the control system 630 to control parts of that farming machine in analogous ways to the control system 630 controlling parts of the dual-path windrower 610. Referring back to FIG. 6, the control system 630 can be completely integrated into the dual-path windrower 610 or can incorporate external components such as a driver's smartphone or tablet or other portable or remote or onboard control devices. The controller implements a stability control mode and a selective rear-steer engagement and actuation mode. The input sensors 644 interface with the user drive input mechanisms 628 and can include a steering wheel sensor for sensing an angle of the steering wheel 640, a forward-neutral-reverse sensor for sensing a position of the forward-neutral-reverse lever 642, and any other suitable input sensors depending on the number and type of drive input mechanisms. The input sensors 644 can be switches, electrical resistance sensors, temperature sensors, touch sensors capacitance sensors, position sensors, angle sensors, speed sensors, proximity sensors, Hall-effect sensors, accelerometers, gyroscopes, pressure sensors, time-of-flight sensors, optical sensors, imaging sensors, cameras, and the like. The status sensors 646 interface with the drive wheels 620, the caster wheels 622, the harvesting component 624, the drive system 618, the rear-steer mechanisms 626, and/or the user drive input mechanisms 628 for sensing statuses of the interfaced devices. The output sensors 648 interface with the drive wheels 620, the caster wheels 622, the harvesting component 624, the drive system 618, the rear-steer mechanisms 626, and/or the user drive input mechanisms 628 for sensing an output of the interfaced device. The input sensors 644, status sensors 646, and output sensors 648 can be independent from each other or can have overlapping or dual purposes depending on the context. Any of the sensors described herein can be switches, electrical current sensors, electrical resistance sensors, temperature sensors, capacitance sensors, position sensors, angle sensors, speed sensors, proximity sensors, inductive sensors, Hall-effect sensors, compass, inertial sensors, accelerometers, gyroscopes, pressure sensors, viscosity sensors, composition sensors, fluid flow sensors, acoustic sensors, wave interference sensors, radio receivers, GPS receivers, radar sensors, time-of-flight sensors, optical sensors, imaging sensors, cameras, engine rpm sensors, caster wheel angle sensors, drive wheel differential sensors, and the like. Also, the control system 630 can include computing components such as a processor, memory, power components, and communication components for communicating with the input sensors 644, status sensors 646, output sensors 648, and other components of the control system and the windrower 610. The control system 630 can perform all logic functions, or it can be divided into multiple individual controllers, each participating in the control execution. Portions of distributed control and signal processing can exist within input and output devices as well. The control system 630 can run a computer program stored in or on computer-readable medium residing on or accessible by the control system. In some embodiments, the control system 630 is part of or in communication with the computing system 200, and in such embodiments, the sensor 220 can be, include or be a part of the sensors of the control system (e.g., see sensors 644, 646, and 648). It is to be understood that a sensor or another part of the dual-path windrower 610 (e.g., see sensors 644, 646, and 648) is positioned near various parts of the windrower (whether it is a dual-path windrower or another type of windrower) to sense or capture one or more physical or operational parameters of the windrower or operating parts of the windrower. And, it is to be further understood that the sensed or captured parameters described with respect to the methods and systems described herein can include such parameters. Also, it is to be understood that, in general, any farming machine described herein can include analogous sensors positioned near various parts of such a machine (such as sensors of a harvester, a planter, a baler, a sprayer, or another type of farming machine or implement) to sense or capture one or more physical or operational parameters of the farming machine or operating parts of the machine. And, it is to be further understood that the sensed or captured parameters described with respect to the methods and systems described herein can include such parameters. Also, again, it is to be understood that, in general, any farming machine described herein can include an analogous control system to the control system 630 to control parts of that farming machine in analogous ways to the control system 630 controlling parts of the dual-path windrower 610.

Also, the dual-path windrower 610 includes a camera 690, and in some examples, includes additional cameras. The camera 690 is configured to capture images of crop while the crop is being harvested or just before the crop is harvested (e.g., see images 1300 and 1400 shown in FIGS. 1300 and 1400 respectively). In some embodiments, another camera of the windrower 610 is in another section of the machine wherein it can capture images of crop that has been harvested or processed. It is to be understood that a camera of the dual-path windrower 610 (e.g., see camera 690) is positioned near various parts of the windrower (whether it is a dual-path windrower or another type of windrower) to capture images of the crop as it is harvested or processed or to capture images of operating parts of the windrower. And, it is to be further understood that the captured images described with respect to the methods and systems described herein can include such images.

FIGS. 7 illustrates a schematic side view of a baler 810 with some portions of the baler being broken away to reveal some internal details of construction. FIG. 8 illustrates a schematic side view of a part of the baler 810, with some portions of the part of the baler being broken away to reveal some internal details of construction. Some embodiments of a farming machine described herein include the baler 810 or any other type of baler. It is to be understood that, in general, any of the farming machines described herein can also include mechanical and operational parts to the level of specificity as provided herein for the baler 810. However, for the sake of conciseness, such specificity may not be provided for all of the types of farming machines described herein. And, it is to be understood that the sensed or captured parameters of crop fields, crops, and farming machines described herein with respect to the methods and systems described herein can include the sensed and captured parameters of the baler or of any other type of farming machine described herein.

The baler 810 includes a towing and driveline portion 812 extending from a main body 814. The towing and driveline portion 812 includes a tow hitch 816 configured to be connected to a towing vehicle such as a tractor or the like during operation, such that the baler is pulled in a forward direction along a windrow of dried hay or similar crop lying in a field. The towing and driveline portion 812 also includes driveline connections 818 for operably connecting the drivable features of the baler 810 (e.g., the pickups, rotor, baling mechanism, etc.) to a PTO portion of the towing vehicle. The main body 814 includes a crop pickup portion 820 and a baling portion 822. During operation, the crop pickup portion 820 engages the cut hay or other crop lying in a field and conveys it upward and rearward towards the baling portion 822. The baling portion 822 in turn compresses the hay into a shape (in the case of baler 810, which is a round baler, into a cylindrical bale), wraps the bale, and ejects the bale into the field for later retrieval. The crop pickup portion 820 includes a rotary rake 824 that engages the hay or other crop in a windrow. The rotary rake 824 includes a plurality of spinning tines 826 that contact the hay or other crop as the baler 810 is towed forward and flings the hay or other crop upwards and rearwards toward the baling portion 822. The crop pickup portion 820 includes a rotor 828 that is configured to stuff the hay or other crop into the baling portion 822. In some embodiments, the crop pickup portion 820 includes one or more augers operably coupled to the rotor 828 and sandwiching a plurality of stuffers 834 or else provided upstream of the rotor 828. When the hay or other crop leaves the rotary rake 824, the augers center the hay and the spinning stuffers 834 of the rotor 828 pack the hay into the baling portion 822. The baling portion 822 includes a baling chamber 836, a plurality of compression belts 838, and a wrapping mechanism. The rotor 828 stuffs the hay or other crop into the baling chamber 836, and more particularly into the compression belts 838 provided in the baling chamber 836. The rotating compression belts 838 continuously roll the hay or other crop and apply pressure thereto, therefore compacting the hay or other into a densely packed bale. The compression belts 838 are expandable via a tension arm 839 such that as more and more hay or other crop enters the baling chamber 836, the circumference of the portion of the compression belts 838 pressing on the bale 842 expands as the outer circumference of the bale 842 expands with the addition of more hay or other crop 855 being added to the bale 842. Once a selected size of the bale 842 is achieved, the wrapping mechanism wraps the outer circumference of the bale 842 in plastic, netting, or another type of wrap. Finally, a movable tailgate 844 of the baler 810 swings open and the wrapped bale 842 is ejected into the field for later collection.

It is to be understood that the sensed or captured parameters of crop fields, crops, and farming machines described herein with respect to the methods and systems described herein can include the sensed and captured parameters of the baler 810 as well as parameters of crop processed by the baler. Some embodiments are directed to a material throughput sensing system incorporated into agricultural equipment (such as the baler 810), which senses a force exerted on portions of the equipment (such as crop pickup portion 820 of the baler) and correlates the force to some parameter (such as a rate of hay or other crop entering the baling portion 822 of the baler 810). This is turn is useable to be correlated to other parameters of farming operations (such as mat thickness or bale growth rate in the baler 810) in which even other parameters (such as the monitored mat thickness or bale growth rate) are useable. For example, referring back to FIGS. 7 and 8 specifically, the sensing system or a second sensing system is incorporated into the baler 810 which senses a force exerted on portions of the baling portion 822 and correlates the force to mat thickness or bale growth rate in the baler such that the monitored mat thickness or bale growth rate is useable as control system inputs for operations of the baler, such as using the inputs for controlling ground speed of the baler. Also, in some embodiments, the crop pickup portion 820 includes a rotor floor 846, which is movable, directly beneath the rotor 828. The rotor floor 846 increases a cross-sectional area of an inlet to the baling chamber 836 in an effort prevent the inlet of the baling chamber 836 from becoming blocked. The rotor floor 846 reduces the risk of blockage by incorporating a suspension unit that allows the rotor floor 846 to translate or rotate with respect to a rotational axis of the rotor 828 thereby altering a passageway between the rotor 828 and the rotor floor 846 during use. In some embodiments, the sensing system or a second sensing system incorporated into agricultural equipment such as the baler 810 senses a force exerted on the rotor floor 846 and correlates the force to mat thickness or bale growth rate in the baler such that the monitored mat thickness or bale growth rate is useable as control system inputs for operations of the baler, such as using the inputs for controlling ground speed of the baler. When no force or relatively little force is applied to the rotor floor 846, the floor is in a first position 852 where it generally abuts the rotor 828. However, as the force acting on the rotor floor 846 increases, the acting force counteracts the biasing force thus moving the rotor floor downward and away from the rotor 828 to a second position 854. It should be appreciated that the first and second positions 852, 854 are illustrative only and in practice there will be infinite positions for the rotor floor 846 to occupy rotates or translates during operation. In some embodiments, the sensing system or a second sensing system incorporated into agricultural equipment such as the baler 810 senses a position or movement or a related pressure of the rotor floor 846 or the rotor 828 or any other part of the baler 810 and correlates the position or movement or the related pressure to mat thickness or bale growth rate in the baler such that the monitored mat thickness or bale growth rate is useable as control system inputs for operations of the baler, such as using the inputs for controlling ground speed of the baler. For example, the tension arm 839, is configured to support adjustment or expansion of the perimeter of the compression belts 838, and in some embodiments, operable to expand or contract the perimeter formed by the compression belts. In some embodiments, the perimeter formed by the compression belts is a structure and mechanism for holding and forming the bale by exerting tension on outer portions of the bale. In some embodiments, the sensing system or a second sensing system incorporated into agricultural equipment such as the baler 810 senses a position or movement or a related pressure of the tension arm 839 and correlates the position or movement or the related pressure to mat thickness or bale growth rate in the baler such that the monitored mat thickness or bale growth rate is useable as control system inputs for operations of the baler, such as using the inputs for controlling ground speed of the baler. With respect to other control systems of other farming machines described herein, it is to be understood that, in general, any farming machine described herein can include an analogous control system to the control system of the baler 810 to control parts of that farming machine in analogous ways to the control system controlling parts of the baler 810.

Specifically, with respect to FIG. 8 and control systems of balers, aspects of different parts of the baler 810, such as sensors and a controller, measure force, pressure, movement, or position related to the rotor 828, the rotor floor 846, the tension arm 839, or any other moving part of the crop pickup portion 820 and the baling portion 822 of the baler 810, such as force acting upon the rotor floor 846 or the displacement of the rotor floor 846 as an indication of how much hay or other crop is entering the baler 810 and thus the baling chamber 836 as well as an indication of mat thickness or bale growth rate in the baler. For example, how much hay or other crop is entering the baler 810 is useable to determined mat thickness or bale growth rate in the baler 810. For example, as the baler 810 is towed in a forward direction, the crop pickup portion 820 engages hay or other crop 855 lying in a windrow and conveys it towards the baling portion 822 via the rotor 828. In this regard, the hay or other crop 855 is forced between the rotor 828 and the rotor floor 846 at an impingement portion 856. Due to the compression of the hay or other crop 855 between the rotor 828 and the rotor floor 846 at the impingement portion 856, the hay or other crop 855 exerts a force on the rotor floor 846 causing it to displace. More particularly, the rotor floor 846 angularly displaces (as indicated by arrow 858), or linearly displaces (as indicated by arrow 860). The force exerted on the rotor floor 846, the angular displacement of the rotor floor 846, or the linear displacement of the rotor floor 846, or a combination thereof is measurable to determine a rate of hay entering the baler 810 and thus the baling chamber 836 as well as to determine mat thickness or bale growth rate in the baler 810.

In some embodiments, the information indicative of the rate of hay or other crop 855 entering the baler or other piece of equipment, or the monitored take-up rate or the information indicative of mat thickness or bale growth rate, or a combination thereof, is stored via on onboard memory or the like for later transmission to a FMIS or similar software package. In other embodiments, the data is wirelessly transmitted to a remote personal computer, server, or other suitable device for later review and use by the grower using the FMIS or similar. With respect to other control systems and information systems of other farming machines described herein, it is to be understood that, in general, any farming machine described herein can include an analogous control system to the control system of the baler 810 to control parts of that farming machine in analogous ways to the control system controlling parts of the baler 810 and any farming machine described herein can interact with analogous computer information systems such as the FMIS.

It is to be understood that a sensor or another part of the baler 810 (e.g., see sensors 862, 863, 864, and 866) is positioned near various parts of the baler to sense or capture one or more physical or operational parameters of the baler or operating parts of the baler. And, it is to be further understood that the sensed or captured parameters described with respect to the methods and systems described herein can include such parameters. Also, it is to be understood that, in general, any farming machine described herein can include analogous sensors positioned near various parts of such a machine (such as sensors of a harvester, a planter, a windrower, a sprayer, or another type of farming machine or implement) to sense or capture one or more physical or operational parameters of the farming machine or operating parts of the machine. And, it is to be further understood that the sensed or captured parameters described with respect to the methods and systems described herein can include such parameters. Also, again, it is to be understood that, in general, any farming machine described herein can include an analogous control system to the control system of the baler 810 to control parts of that farming machine in analogous ways to the control system of the baler controlling parts of the baler.

Also, the baler 810 includes a camera 890 (as shown in FIG. 7), and in some examples, includes additional cameras (e.g., see camera 892). The camera 890 is configured to capture images of crop while the crop is being collected or just before the crop is collected by the baler. In some embodiments, another camera of the baler 810 (e.g., see camera 892) is in another section of the machine wherein it can capture images of crop that has been collected or processed (such as after the crop has been wrapped, e.g., a wrapped bale). It is to be understood that a camera of the baler 810 (e.g., see cameras 890 and 892) is positioned near various parts of the baler to capture images of the crop as it is collected or processed or to capture images of operating parts of the baler. And, it is to be further understood that the captured images described with respect to the methods and systems described herein can include such images.

FIG. 9 is a simplified side perspective view of a system 900 including a tractor 902 and an implement 920. Specifically, the implement 920 is a planter; however, it could be any other type of farming implement for the purposes of this disclosure. Also, though the implement 920 is described herein as a planter, other types of implements may have other types of row units, such as tillage implements (e.g., disc harrows, chisel plows, field cultivators, etc.) and seeding tools (e.g., grain drills, disc drills, etc.).

Some embodiments of a farming machine described herein include the tractor 902 or the implement 920 or another type of farming machine or implement. It is to be understood that, in general, any of the farming machines described herein can also include mechanical and operational parts to the level of specificity as provided herein for the tractor 902 and the implement 920. However, for the sake of conciseness, such specificity may not be provided for all of the types of farming machines described herein. And, it is to be understood that the sensed or captured parameters of crop fields, crops, and farming machines described herein with respect to the methods and systems described herein can include the sensed and captured parameters of the tractor 902 and the implement 920 or of any other type of farming machine described herein.

The tractor 902 includes a chassis 904 supported by wheels 906 (or tracks in some examples). An operator cab 908 is supported by the chassis 904 and includes a control system 910 that controls operation of the tractor 902 and the implement 920. In some embodiments, the operator cab 908 is omitted if the tractor 902 is configured to function without an onboard human operator (e.g., as a remotely operated drone or a computer-operated machine). In some embodiments, the control system 910 is, includes, or is a part of a computing system (such as the computing system shown in FIG. 2). A GPS receiver is mounted to the tractor 902 and connected to communicate with the control system 910. With respect to other control systems of other farming machines described herein, it is to be understood that, in general, any farming machine described herein can include an analogous control system to the control system of the system 900 to control parts of that farming machine in analogous ways to the control system controlling parts of the system 900. Also, the tractor 902 has a power source 912 configured to move wheels 906 of the tractor. The power source 912 includes an internal combustion engine, an electric motor, or other another type of power source. The power source 912 also provides power to a lift system 914 carried by the tractor 902, which is depicted as a tow hitch 916. For the purpose of simplifying the illustration in FIG. 9, one of the rear wheels 906 has been omitted from view to more clearly show the tow hitch 916. The tow hitch 916 is a 2-point lifting hitch, as shown. In some other embodiments, the implement 920 is pulled by a 3-point lifting hitch or a fixed drawbar, for example. In some embodiments, if the implement 920 is pulled by a 3-point hitch, the top link thereof is not connected to the implement 920. Thus, in such embodiments, the implement 920 pivots with respect to the tow hitch 916. In some embodiments, the lift system 914 is a part of the implement 920, and thus the implement 920 is pulled by a fixed drawbar that is stationary relative to the tractor 902. In such embodiments, the implement 920 itself includes a pivoting or lateral adjustment, such as a support coupled to one or more actuators, in place of the tow hitch 916 shown. As shown in FIG. 9, the implement 920 has a frame 922 including an integrated toolbar 924 supporting row units 926. The row units 926 are any type of ground-engaging device for planting, seeding, fertilizing, tilling, or otherwise working crops or soil, arranged in rows. As an example, the row units 926 are shown in the form of planter row units. Each of the row units 926 have a body 928 pivotally connected to the toolbar 924 by a parallel linkage 930, enabling each one of the row units 926 to move vertically independent of the toolbar 924 and each other. In some embodiments, the body 928 of a row of the row units 926 is connected to the toolbar 924 by another structure, such as a rotating arm. The body 928 operably supports one or more hoppers 932, a seed meter 934, a seed delivery mechanism 936, a seed trench opening assembly 938, a trench closing assembly 940, and any other components as known in the art that is supported by such a body.

It is to be understood that the sensed or captured parameters of crop fields, crops, and farming machines described herein with respect to the methods and systems described herein can include the sensed and captured parameters of the system 900 as well as parameters of the seed and crop field operated on by the system 900. The implement 920 is supported by wheels 946 coupled to the implement frame 922 (in which only one of the wheels 946 is shown in FIG. 9). Each of the wheels 946 rotate about an axle 948 connected to the frame 922 by a fixed mount 950. In some embodiments, the axles connected to the frame 922 are part of one axle. An axle 948 defines an axis of rotation around which the corresponding wheel of the wheels 946 rotates. The axle 948 includes or is a part of a spindle that includes a load sensor 949 (such as a load cell), and both the spindle and the load sensor are parts of a wheel of the wheels 946 in some embodiments. In some other embodiments, the spindle is not a part of a wheel of the wheels 946. In some embodiments, each wheel of the wheels 946 is replaced with a group of wheels in tandem. In such embodiments, each group of wheels operates in tandem according to a combination of linkages of a pivot. Also, in some embodiments, the respective smart spindles of the wheels 946 are configured to monitor weight distribution across tires of the wheels, as well as is automatically adjust tire pressures while the implement is operating in the crop field. By utilizing the aforementioned feature, the spindles of the wheels 946 are capable of reducing tire pressure to low PSI levels, which increases respective gross flat plate areas and reduces compaction of the wheels. A respective weight of the implement frame 922 is supported by each one of the wheels 946 and the load sensor 949 of each wheel is configured to sense the respective weight. To clarify, a respective weight is exerted on a wheel of the wheels 946 and the respective weight is a part of the overall weight of the implement frame 922; and thus, the weights sensed by each load sensor 949 of the wheels 946 can be added together by a computing system to determine the overall weight on the wheels 946. Though only one of the wheels 946 is shown in FIG. 9, multiple wheels 946 (e.g., two wheels, three wheels, four wheels, etc., depending on the embodiment) supports the weight of the implement frame 922. A row position sensor 942 and a row position sensor 944 are each configured to sense a position of a row unit 926 (such as sense position relative to the ground). In some embodiments, row position sensors 942 and 944 are attached to the body 928 of the row unit 926 itself. In other embodiments, the sensors 942 and 944 are carried by the toolbar 924, the tractor 902, or even by another vehicle (e.g., another ground vehicle, an unmanned aerial vehicle, etc.). In some embodiments, the sensor 942 is a rotary sensor configured to measure an angle of an element of the parallel linkage 930 relative to the body 928 of the row unit 926 or to the toolbar 924, and it is connected to a pivot point of the body 928 of the row unit 926 or to the toolbar 924. In some embodiments, the sensor 942 is an accelerometer based sensor or an inclinometer. A sensor 945 is configured to detect the position of the toolbar 924 (such as a position relative to the ground). In some embodiments, the sensors 944 and 945 include a non-contact depth sensor, for example, an optical sensor, an ultrasonic transducer, an RF (radio frequency) sensor, lidar, radar, or any type of trench depth sensor that senses depth without contacting the trench, or some combination thereof. In some embodiments, the sensors 942, 944, 945, and 949 provide information to the control system 910, which information can be used by the control system 910 to determine how to adjust the lift system 914, pressure in one or more of the wheels 946, position of one or more of the row units 926, position of the toolbar 924, or position of one or more of sections of the toolbar For example, the control system 910 is configured to receive a signal (e.g., a wired or wireless signal) related to the position of a row unit of the row units 926 (such as relative to the ground) and cause the lift system 914 to raise or lower based at least in part on the signal. Also, for example, the control system 910 is configured to receive a signal related to the position of a row unit of the row units 926 and cause the row unit to raise or lower based at least in part on the signal. Also, for example, the control system 910 is configured to receive a signal related to a weight exerted on a wheel of the wheels 946 and cause the wheel to inflate or deflate based at least in part on the signal-such as inflate or deflate via a smart spindle configured to inflate and deflate the wheel according to the signal. Also, for example, the control system 910 is configured to receive a signal related to the position of the toolbar 924. In some embodiments, when the tractor 902 encounters a change in field elevation or slope, one or more of the sensors 942, 944, 945, and 949 provide a signal or signals to the control system 910, and the control system 910 uses the signal(s) to calculate how to change the position of the lift system 914 or another adjustable part of the implement 920 or how to change the pressurization of the wheels 946 to maintain a preselected position of the toolbar 924 or one or more of the row units 926. These aforementioned states, positions and other attributes of the implement 920 described herein affect the respective weights distributed on each of the wheels 946 and other parts of the implement; and thus, the sensed distributed weights on the wheels and other parts provide feedback to the control system 910 as well so that the system can enhance its control the implement or tractor. With respect to other control systems of other farming machines described herein, it is to be understood that, in general, any farming machine described herein can include an analogous control system to the control system of the system 900 to control parts of that farming machine in analogous ways to the control system controlling parts of the system 900.

It is to be understood that a sensor or another part of the system 900 (e.g., see sensors 942, 944, 945, and 949) is positioned near various parts of the system 900to sense or capture one or more physical or operational parameters of the system 900 or operating parts of the system 900. And, it is to be further understood that the sensed or captured parameters described with respect to the methods and systems described herein can include such parameters. Also, it is to be understood that, in general, any farming machine described herein can include analogous sensors positioned near various parts of such a machine (such as sensors of a harvester, a windrower, a baler, a sprayer, or another type of farming machine or implement) to sense or capture one or more physical or operational parameters of the farming machine or operating parts of the machine. And, it is to be further understood that the sensed or captured parameters described with respect to the methods and systems described herein can include such parameters. Also, again, it is to be understood that, in general, any farming machine described herein can include an analogous control system to the control system of the system 900 to control parts of that farming machine in analogous ways to the control system of the system 900 controlling parts of the system 900.

Also, the system 900 includes at least two cameras (e.g., see cameras 990 and 992). The camera 990 is positioned near a front end of the tractor 902 and configured to capture images of a crop field while a crop is being planted in the field (or while some other type of task is applied to the field). In some embodiments, another camera of the system 900 is in another section of the system 900 wherein it can capture images of the crop field after the field has been processed (e.g., planted on) by the implement 920 (e.g., see camera 992). It is to be understood that such a camera of the system 900 (e.g., see camera 992) is positioned near a rear end of the implement 920. And, it is to be further understood that the captured images described with respect to the methods and systems described herein can include images captured by cameras 990 and 992.

FIGS. 10, 11, and 12 illustrate methods 1000 and 1100, respectively, in accordance with various embodiments of the present disclosure. Methods 1000 and 1100 are performed by any one of the location tracking systems (e.g., see location tracking system 240), cameras (e.g., see cameras 390, 392, 394, 396, 690, 890, 892, 990, 992) or sensors (e.g., see sensors 220, 644, 646, 648, 832, 833, 942, 944, 945, 949) and any one of the computing systems described herein (e.g., see computing system 200). Methods 1000 and 1100 are alternative embodiments; however, aspects of the two methods can be combined to make a greater or more specific method. And, such a combination is to be considered part of this disclosure. The method shown in FIG. 12 is a sub-method of the method step 1108 of method 1100.

As shown in FIG. 10, method 1000 begins with step 1002, which includes capturing, by a location tracking system (e.g., see location tracking system 240 shown in FIG. 2), such as a GPS, a geographic location (e.g., see GPS coordinates 1312A shown in FIG. 13) of a farming machine (e.g., see farming machines 106, 300, 350, 360, 610, 810, 902, and 920 shown in FIGS. 1, 3, 4, 5, 7, and 9 respectively) while it is in a crop field at a first time within a time range. At step 1004, the method 1000 continues with capturing, by a camera (e.g., see cameras 390, 392, 394, 396, 690, 890, 892, 990, and 992), an image of a farming situation (e.g., see images 1300 and 1600 shown in FIGS. 13 and 16 respectively as well as image stage 1500 shown in FIG. 15) at a second time within the time range. At step 1006, the method 1000 continues with linking, by a computing system (e.g., see computing system 200), the geographic location (e.g., see GPS coordinates 1312A) of the farming machine (e.g., see farming machine 106) to the image of the farming situation. At step 1008, the method 1000 continues with capturing, by a sensor (e.g., see sensors 220, 644, 646, 648, 832, 833, 942, 944, 945, and 949 as well as cameras 390, 392, 394, 396, 690, 890, 892, 990, and 992), farming information (e.g., see farming information 1410 shown in FIG. 14) at a third time within the time range. At step 1010, the method 1000 continues with linking, by the computing system (e.g., see computing system 200), the farming information (e.g., see identified farming condition 1410A) to the image (e.g., see image 1300, 1500, or 1600) of the farming situation. The farming information includes at least one of an identified crop (e.g., see variety label 1310), an identified farming condition (e.g., see identified farming condition 1410A) or an identified operational state or setting of the farming machine (e.g., see identified operational state condition 1410B). The identified crop, condition, or state or setting of the machine are identified by the computing system (e.g., see computing system 200). Also, in some embodiments, the farming information (e.g., see farming information 1410) includes information on a crop being harvested or soon to be harvested by the machine and the machine is a harvester (e.g., see combine harvester 300). In some other embodiments, the farming information includes information on crop being processed by the machine and the machine is a combine harvester. In some other embodiments, the farming information includes information on crop being collected or soon to be collected by the machine and the machine is a baler (e.g., see baler 810). In some other embodiments, the farming information includes on crop being processed by the machine and the machine is a baler. In some other embodiments, the farming information includes a condition of a field where a seed is planted or soon to be planted by the machine and the machine is a planter (e.g., see implement 920). In some other embodiments, the farming information includes a state of the machine and the machine is a planter.

In some embodiments, the camera (e.g., see camera 390) and the sensor are part of the same sensor or are the same sensor, and the computing system (e.g., see computing system 200) identifies the farming information (e.g., see farming information 1410) within the image (such as at step 1108 shown in FIG. 11) as well as links the identified farming information to the image (such as at step 1010 shown in FIGS. 10 and 11). As shown in FIG. 11, method 1100 includes with steps 1002, 1004, 1006, and 1010 of method 1000 but replaces step 1008 with step 1108 that includes identifying, by the computing system, farming information within the image at a third time within the time range. To put it another way, the other method shown in FIG. 11 includes capturing, such as by a GPS or another type of location tracking system, a geographic location of a farming machine while it is in a crop field at a first time within a time range (e.g., see step 1002) and capturing, by a camera of the machine, an image of a farming situation at a second time within the time range (e.g., see step 1004). The other method also includes linking, by a computing system, the geographic location of the farming machine to the image of the farming situation (e.g., see step 1006). But unique to this method, method 1100 includes identifying, by the computing system, farming information within the image at a third time within the time range (e.g., see step 1108), and then linking, by the computing system, that farming information to the image of the farming situation (e.g., see step 1010). In such an alternative method, the farming information also includes at least one of an identified crop, an identified farming condition or an identified operational state or setting of the farming machine. In some of such embodiments, the identifying the farming information (e.g., see farming information 1410 as well as step 1108) includes enhancing the image (e.g., see image stage 1500) based on digital signal processing (e.g., see step 1202 of step 1108 shown in FIG. 12). Also, the identifying the farming information includes inputting the enhanced image (e.g., see image stages 1502 1504 which show enhanced images) into an artificial neural network (e.g., see step 1204). Further, the identifying the farming information includes determining, by a computing scheme (e.g., see computing scheme 1207), parameters of farming information based on the enhanced image (e.g., see step 1206) as well as using an output of the computing scheme or a derivative thereof to identify farming information in the image (e.g., see step 1208).

In some embodiments of both methods 1000 and 1100, the determination of the parameters of the farming information (e.g., see label 1310 and conditions 1410A and 1410B) is based at least on a computer vision analysis (e.g., see step 1206). In some of such examples, the computer vision analysis (e.g., see step 1206) includes inputting aspects of the images (e.g., see image stage 1500) or derivatives of aspects of the images into an ANN (e.g., see computing scheme 1207). In some of such examples, the ANN (e.g., see computing scheme 1207) includes or is part of a deep learning process that determines the parameters of the farming information or is a basis for the determination of the parameters. Also, in some of such examples, the deep learning process includes a CNN. And, in some of such examples, the deep learning process includes a network of CNNs.

In some embodiments of both methods 1000 and 1100, the linking of the geographic location (e.g., see GPS coordinates 1312A and step 1010) of the farming machine (e.g., see farming machine 106) to the image includes geotagging the image (e.g., see geotag 1312 shown in FIGS. 13 and 16) which includes adding geographical identification metadata to an item including the image. In some embodiments, the metadata can be embedded in the image or the item. And, in some embodiments, the metadata is stored separately and linked to the image or the item. The item can be an image file, an image stream, an image object, etc. Also, in some embodiments, the item is an image file or a video file, or a media feed, or a message file, or another type of item that is configurable to include a digital image. And, in some embodiments, the metadata includes latitude and longitude coordinates, altitude, bearing, distance, accuracy data, a place name, and/or a time stamp. In some of such embodiments, the linking of the farming information (e.g., see farming information 1410) to the image includes adding the identified farming information to the metadata before or after is linked to the image. This makes the geotagging advance geotagging (e.g., see advance geotag 1412 shown in FIGS. 14 and 17).

In some embodiments of both methods 1000 and 1100, the location tracking system (e.g., see location tracking system 240) includes a GPS or is a part of a GPS. In some embodiments, the camera (e.g., see camera 390) is attached to the machine (e.g., see harvester 300). Also, in some embodiments, the time range is less than a second or less than a minute. In some embodiments, the first time, second time, and the third time are in the same instance of time. In some embodiments, the capturing of the image, the location (e.g., see GPS coordinates 1312A) and the farming information (e.g., see farming information 1410) occur at the same time. And, as mentioned, in some embodiments, the linking (such as at step 1010) includes advance geotagging (e.g., see advance geotag 1412).

In some embodiments of both methods 1000 and 1100, the farming machine (e.g., see farming machine 106) is in the farming situation. In some other embodiments, the farming machine is within a certain distance of the farming situation. In some embodiments, the farming situation is within the farming machine. Also, in some embodiments, the farming condition occurs in the machine. In some embodiments, the farming condition occurs within a certain distance of the machine.

In some embodiments of both methods 1000 and 1100, the image includes a crop being harvested or soon to be harvested by the machine and the machine is a harvester (e.g., see combine harvester 300 as well as images 1300 and 1400). In such cases, the computing system (e.g., see computing system 200) identifies the crop and includes the crop in the farming information (e.g., see farming information 1410). The machine can also be a windrower (e.g., see windrower 610), a baler (e.g., see baler 810), a tractor (e.g., see tractors 902 and 360), a planter (e.g., see implement 920), a sprayer, or any other type of agricultural machine or implement used for harvesting crops or other farming tasks. In such embodiments, the camera (e.g., 390) and the sensor can be part of the same sensor or actually be the same sensor. And, in some embodiments, the harvester is a combine harvester (e.g., see harvester 300).In some of such embodiments, the image further includes a condition of the field, and the computing system identifies the condition and includes the condition in the farming information (e.g., see farming information 1410). In some of such embodiments, the condition of the field includes a soil condition (such as moister, dryness, quality, color, texture, density, etc.) or a crop condition (such as moister, dryness, quality, color, texture, density, reflectiveness, etc.). In some of such embodiments, the image further includes a state of the farming machine, and the computing system identifies the state and includes the state in the farming information (e.g., see farming information 1410). In some of such embodiments, the state of the machine includes a machine setting, an alignment of the machine relative to a portion of the field, a load of a part of the machine used in crop harvesting, or a throughput of the machine.

In some embodiments of both methods 1000 and 1100, the image includes a crop being processed or immediately after it has been processed by the machine and the machine is a combine harvester (e.g., see combine harvester 300 as well as images 1600 and 1700), and the computing system (e.g., see computing system 200) identifies the crop and includes the crop in the farming information (e.g., see farming information 1410). In some of such embodiments, the camera and the sensor are a part of the same sensor or are actually the same sensor. In some of such embodiments, the image further includes a state of the machine, and the computing system identifies the state and includes the state in the farming information. In some of such examples, the state of the machine includes a machine setting, a load of a part of the machine used in crop processing, or a throughput of the machine.

In some embodiments of both methods 1000 and 1100, the image includes a condition of the crop in the machine before or after processing by the machine and the machine is a combine harvester (e.g., see combine harvester 300 as well as images 1600 and 1700). And, the computing system (e.g., see computing system 200) identifies the condition and includes the condition in the farming information (e.g., see farming information 1410). In some of such embodiments, the camera and the sensor are a part of the same sensor or are actually the same sensor. In some of such embodiments, a part of the crop is a kernel, a seed, or a berry, and the condition of the crop or the part of the crop includes a shape, a size, a color, a texture, a density, a reflectiveness, or another quality or condition. Also, in such examples, the computing system identifies the condition of the crop or the part of the crop and includes such information in the farming information.

In some embodiments of both methods 1000 and 1100, the image includes crop being collected or soon to be collected by the machine and the machine is a baler (e.g., see baler 810 shown in FIGS. 7 and 8), and the computing system (e.g., see computing system 200) identifies the crop and includes the crop in the farming information. Or, the image includes crop being processed by the machine and the machine is a baler (e.g., see baler 810), and the computing system (e.g., see computing system 200) identifies the crop and includes the crop in the farming information. In some of such embodiments, the camera and the sensor are a part of the same sensor or are actually the same sensor. In some of such embodiments, the image further includes a condition of the field, and the condition of the field includes a soil condition (such as moister, dryness, quality, color, texture, density, etc.) and/or a crop condition (such as moister, dryness, quality, color, texture, density, reflectiveness, etc.). And, the computing system identifies the condition and includes the condition in the farming information. In some of such embodiments, the image further includes a state of the farming machine, and the state of the machine includes a machine setting, an alignment of the machine relative to a portion of the field, a load of a part of the machine used in crop collection, or a throughput of the machine. And, the computing system identifies the state and includes the state in the farming information. In some embodiments, the image further includes a condition of the crop before or after processing, and the condition of the crop includes texture, density, reflectiveness, or another quality, etc. And, the computing system identifies the condition and includes the condition in the farming information.

In some embodiments of both methods 1000 and 1100, the image includes a condition of a field where a seed is planted or soon to be planted by the machine and the machine is a planter (e.g., see implement 920 shown in FIG. 9), and the computing system (e.g., see computing system 200) identifies the condition and includes the condition in the farming information. In some of such embodiments, the image further includes a condition of the field, and the condition of the field includes a soil condition (such as moister, dryness, quality, color, texture, density, etc.) and/or a crop condition (such as moister, dryness, quality, color, texture, density, reflectiveness, etc.). In some of such embodiments, the image further includes a state of the machine and the machine is a planter, and the computing system identifies the state and includes the state in the farming information. In some of such embodiments, the state of the machine includes a machine setting, an alignment of the machine relative to a portion of the field, an engine load or a load of a part of the machine used in planting, or a throughput of the machine. In some of such embodiments, the camera and the sensor are a part of the same sensor or are actually the same sensor.

FIG. 13 illustrates an example image 1300 of crops in a field derived from image data. Image 1300, which has been derived from image data that has been through many image processing stages (such as the stages shown in FIG. 15), shows multiple determined characteristics of the crop captured in the image. The image 1300 is the result of steps 1108 and 1010 or steps 1008 and 1010 in some embodiments, and the result of step 1208 in some more specific embodiments. The characteristics determined include a crop height characteristic 1302, a crop width characteristic 1304, a crop spacing characteristic 1306, and crop color characteristics 1308A and 1308B. From the crop color characteristics, a crop reflectiveness characteristic can be derived. Also, from the crop width and spacing characteristics, a crop density characteristic can be derived. Further, another characteristic determined that is presented in the image 1300 is the field slope 1320 of the field captured in the image. Also, included with the image 1300 is geotag 1312 as well as crop variety label 1310. The geotag 1312 provides the date and time that the image 1300 was captured as well as the GPS coordinates of the harvester when the image was captured. In some embodiments, a geotag such as geotag 1312 is the output of step 1002 of method 1000 or 1100. The variety label 1310 provides the variety of the crop determined from at least some of the determined characteristics. In some embodiments, a label, such as label 1310, is the output of step 1008, 1108, or 1010.

FIG. 14 illustrates an example image 1400 of crops in a field derived from image data such as the image data used to derive image 1300. Image 1400, which has been derived from image data that has been through many image processing stages (such as the stages shown in FIG. 15), would usually show multiple determined characteristics of the crop captured in the image; however such characteristics have been removed from the illustration to emphasize the addition of the advance geotag 1412 added to the image.

The advance geotag 1412, in some embodiments, is the output of step 1010 of method 1000 or 1100. The advance geotag 1412, as shown, includes metadata well beyond that of a typical geotag. For example, the metadata of advance geotag 1412 includes farming information 1410 that includes variety label 1310, identified farming condition 1410A, and identified operational state condition 1410B. Other farming information is also included in the farming information 1410, such as the variety of the crop identified, a crop quality rating for the identified crop, a crop yield rating for the crop, various slopes of the crop field, soil conditions, weather, the speed of the harvester. All the information shown in farming information 1410 is advance geographically-linked farming information that has been linked to the image data associated with image 1400 through the linking described herein (e.g., see step 1010). In some embodiments, the advance geographically-linked farming information is linked via the tracked geographic location and corresponding time of the tracking (e.g., see GPS coordinates 1312A) of the farming machine. In some embodiments, the image 1300 is a geotagged image and the image 1400 is an advance geotagged image, in which in such embodiments, geotagging the image includes adding geographical identification metadata to an item including the image. In some embodiments, the metadata can be embedded in the image or the item. And, in some embodiments, the metadata is stored separately and linked to the image or the item. In some embodiments with the advance geotagging, the metadata includes latitude and longitude coordinates, altitude, bearing, distance, accuracy data, a place name, and/or a time stamp as well as linked farming information (e.g., see farming information 1410) that includes the addition of identified farming information to the metadata before or after is linked to the image.

It is to be understood that for the sake of simplicity, farming information 1410 only shows a couple of parameters of farming information and that much more parameters of farming information can be added to the farming information 1410 in other embodiments. For instance, depending on the embodiment, any set of the parameters of farming information described with respective to any one of the farming machines depicted in FIGS. 3 to 9 can be included in the farming information 1410. In short, depending on the embodiment, the farming information 1410 could include geographical location information, machine settings information, and real-time identified and determined crop characteristics. Also, depending on the embodiment, the farming information 1410 could include at least one of an identified crop (e.g., see variety label 1310), an identified farming condition (e.g., see identified farming condition 1410A) or an identified operational state or setting of the farming machine (e.g., see identified operational state condition 1410B). Also, depending on the embodiment, the farming information 1410 could include information on a crop after it has been harvested or processed or it is being harvested or processed or is soon to be harvested or processed by the machine and the machine is a harvester (e.g., see combine harvester 300) or a windrower (e.g., see windrower 610) or a baler (e.g., see baler 810), etc. Also, it could include information on the seed or crop field or another farming condition related to the tracking of a planter (e.g., see implement 920). In short, the metadata of the image or the farming information 1410 could include any of the farming information described herein. Also, again, similar to the geotag 1312, the advance geotag 1412 provides the date and time that the image 1400 was captured as well as the GPS coordinates of the machine when the image was captured.

FIG. 15 illustrates an example image of wheat kernels at three separate stages of image processing in a determination of characteristics of a crop. The image at stage 1500 is a raw preprocessed image such an image captured at step 1002 of method 1000 or 1100, in which a camera mounted to a harvester captures images of a crop while the harvester is moving through a crop field. The image at stage 1502 has been through image preprocessing and image diagnostics. As part of the preprocessing of the image at stage 1502 the image has been cropped to focus on identification of physical characteristics of the crop. The cropping at stage 15602 selects an area of the image that has greater light intensities and that allows for more precise computer vision analysis. The image at stage 1504 has been through additional image processing, which further enhances the computer vision analysis, especially when determining physical characteristics such as seed or kernel size and shape. In some embodiments, the preprocessing illustrated in stages 1502 and 1504 can be a part of the preprocessing in step 1202 shown in FIG. 12. Also, for example, the stage 1504 of the image can be input for the scheme 1207 shown in FIG. 12 in some embodiments. Also, the stage 1504 of the image can be output of the scheme 1207 in some embodiments.

FIG. 16 illustrates an example image 1600 of corn kernels derived from image data. As shown in FIG. 16, image 1600 was derived from a similar set of image data as image 1300 except it was derived from a portion of the data used to derive image 1600, which is related to crop image data after the crop was processed in a harvester; whereas, image 1300 was derived from data in the set related to crop image data before the crop was harvested by the harvester. The set of images including images 1300 and 1600 is associated with a certain position of the harvester at a certain time (which makes it a set). Because the images 1300 and 1600 are from the same set, the image 1600 includes geotag 1312 and label 1310, which is included in other images of the set. Because of this characteristic, in some embodiments, an image from a set can validate other images from the set in the crop classification processes described herein. In some embodiments, an analyzed image of the pre-harvested crop (e.g., image 1300) is used as corroboration for the analysis of the image of the post-processed crop (e.g., image 1600), or vice versa, in determining crop variety for the labeling of the images as well as determining other farming information (e.g., see geotag 1312, advance geotag 1412, and farming information 1410).

Also, similar to image 1300, image 1600 has been derived from image data that has been through many image processing stages (such as the stages shown in FIG. 15), and shows multiple determined characteristics of the crop captured in the image. The image 1600 is the result of step 1006, 1008, 1108, or 1010, depending on the embodiment, and the result of step 1208 in some more specific embodiments. The characteristics determined include identification of a kernel (e.g., see kernel identifications 1602, 1602A, and 1602B) within a certain space or component of the harvester, which can be used to derive different crop yield characteristics. The characteristics determined also include a kernel width characteristic (e.g., see kernel width characteristics 1604 and 1604B), a kernel root characteristic (e.g., see root characteristics 1606, 1606A, and 1606B), and a kernel color characteristic (e.g., see seed color characteristics 1608A and 1608B). From different combinations of the aforementioned kernel characteristics, various crop characteristics can be derived (such as at step 1008 or 1108). And, the variety label 1310 was determined from at least some of such determined characteristics shown in image 1600.

Also, as mentioned, included with the image 1600 is geotag 1312 as well as crop variety label 1310. The geotag 1312 provides the date and time that the image 1300 was captured as well as the GPS coordinates of the harvester when the image was captured. In some embodiments, a geotag such as geotag 1312 is the output of step 1002 of method 1000 or 1100. The variety label 1310 provides the variety of the crop determined from at least some of the determined characteristics. In some embodiments, a label, such as label 1310, is the output of step 1008, 1108, or 1010.

FIG. 17 illustrates an example image 1700 of processed crop (i.e., kernels) derived from image data such as the image data used to derive image 1600. Image 1700, which has been derived from image data that has been through many image processing stages (such as the stages shown in FIG. 15), would usually show multiple determined characteristics of the processed crop captured in the image; however such characteristics have been removed from the illustration to emphasize the addition of the advance geotag 1412 added to the image.

As shown in FIG. 17, image 1700 was derived from a similar set of image data as image 1400 except it was derived from a portion of the data used to derive image 1700, which is related to crop image data after the crop was processed in a harvester; whereas, image 1400 was derived from data in the set related to crop image data before the crop was harvested by the harvester. The set of images is associated with a certain position of the harvester at a certain time (which makes it a set). Because the images 1400 and 1700 are from the same set, the image 1700 includes advance geotag 1412 and farming information 1410, which is included in other images of the set. Because of this characteristic, in some embodiments, an image from a set can validate other images from the set in the crop classification processes described herein. In some embodiments, an analyzed image of the pre-harvested crop (e.g., image 1400) is used as corroboration for the analysis of the image of the post-processed crop (e.g., image 1700), or vice versa, in determining crop variety for the labeling of the images as well as determining other farming information (e.g., see geotag 1312, advance geotag 1412, and farming information 1410).

The advance geotag 1412 shown in FIG. 17 is the same advance geotag shown in FIG. 14. Thus, this part of the specification will not repeat the description of the advance geotag 1412 described in the description of FIG. 14. For a more complete description of advance geotag 1412, see the description of FIG. 14.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. The present disclosure can refer to the action and processes of a computing system, or similar electronic computing device, which manipulates and transforms data represented as physical (electronic) quantities within the computing system's registers and memories into other data similarly represented as physical quantities within the computing system memories or registers or other such information storage systems.

The present disclosure also relates to an apparatus for performing the operations herein. This apparatus can be specially constructed for the intended purposes, or it can include a general-purpose computer selectively activated or reconfigured by a computer program stored in the computer. Such a computer program can be stored in a computer readable storage medium, such as any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computing system bus.

The algorithms and displays presented herein are not inherently related to any particular computer or other apparatus. Various general-purpose systems can be used with programs in accordance with the teachings herein, or it can prove convenient to construct a more specialized apparatus to perform the methods. The structure for a variety of these systems will appear as set forth in the description herein. In addition, the present disclosure is not described with reference to any particular programming language. It will be appreciated that a variety of programming languages can be used to implement the teachings of the disclosure as described herein.

The present disclosure can be provided as a computer program product, or software, which can include a machine-readable medium having stored thereon instructions, which can be used to program a computing system (or other electronic devices) to perform a process according to the present disclosure. A machine-readable medium includes any mechanism for storing information in a form readable by a machine (e.g., a computer). In some embodiments, a machine-readable (e.g., computer-readable) medium includes a machine (e.g., a computer) readable storage medium such as a read only memory ("ROM"), random access memory ("RAM"), magnetic disk storage media, optical storage media, flash memory components, etc.

While the invention has been described in conjunction with the specific embodiments described herein, it is evident that many alternatives, combinations, modifications and variations are apparent to those skilled in the art. Accordingly, the example embodiments of the invention, as set forth herein are intended to be illustrative only, and not in a limiting sense. Various changes can be made without departing from the spirit and scope of the invention.

## Claims

1. A method, comprising:
capturing, by a location tracking system, a geographic location of a farming machine while it is in a crop field at a first time within a time range;
capturing, by a camera, an image of a farming situation at a second time within the time range;
linking, by a computing system, the geographic location of the farming machine to the image of the farming situation;
capturing, by a sensor, farming information at a third time within the time range, wherein the farming information comprises at least one of an identified crop, an identified farming condition or an identified operational state or setting of the farming machine, wherein the identified crop, condition, or state or setting of the machine are identified by the computing system; and
linking, by the computing system, the farming information to the image of the farming situation.

2. The method of claim 1, wherein the image comprises a crop being harvested or soon to be harvested by the machine and the machine is a harvester,
and wherein the computing system identifies the crop and includes the crop in the farming information.

3. The method of claim 2, wherein the image further comprises
a condition of the field, and wherein the computing system identifies the condition and includes the condition in the farming information; and/or
a state of the machine, and wherein the computing system identifies the state and includes the state in the farming information.

4. The method of claim 1, wherein the image comprises a crop being processed or immediately after it has been processed by the machine and the machine is a combine harvester, and wherein the computing system identifies the crop and includes the crop in the farming information; optionally wherein the image further comprises a state of the machine, and wherein the computing system identifies the state and includes the state in the farming information.

5. The method of claim 1, wherein the image comprises a condition of the crop in the machine before or after processing by the machine and the machine is a combine harvester,
and wherein the computing system identifies the condition and includes the condition in the farming information.

6. The method of claim 1, wherein the image comprises crop being collected or soon to be collected by the machine and the machine is a baler,
and wherein the computing system identifies the crop and includes the crop in the farming information.

7. The method of claim 1, wherein the image comprises crop being processed by the machine and the machine is a baler,
and wherein the computing system identifies the crop and includes the crop in the farming information.

8. The method of claim 1, wherein the image comprises a condition of a field where a seed is planted or soon to be planted by the machine and the machine is a planter,
and wherein the computing system identifies the condition and includes the condition in the farming information.

9. The method of claim 1, wherein the image comprises a state of the machine and the machine is a planter,
and wherein the computing system identifies the state and includes the state in the farming information.

10. The method of claim 1,
wherein the linking of the geographic location of the machine to the image comprises geotagging the image which includes adding geographical identification metadata to an item comprising the image,
wherein the linking of the farming information to the image comprises adding the farming information to the metadata.

11. The method of claim 1, wherein the farming information comprises:
information on a crop being harvested or soon to be harvested by the machine; and/or
information on crop being processed by the machine; and
wherein the machine is a harvester.

12. The method of claim 1, wherein the farming information comprises:
information on crop being collected or soon to be collected by the machine; and/or
information on crop being processed by the machine; and
the machine is a baler.

13. The method of claim 1, wherein the farming information comprises:
a condition of a field where a seed is planted or soon to be planted by the machine; and/or
a state of the machine; and
the machine is a planter.

14. A system, comprising:
a location tracking system configured to capture a geographic location of a farming machine while it is in a crop field at a first time within a time range;
a camera configured to capture an image of a farming situation at a second time within the time range;
a sensor configured to capture farming information at a third time within the time range; and
a computing system configured to:
link the geographic location of the farming machine to the image of the farming situation; and
link the farming information to the image of the farming situation, and wherein the farming information comprises at least one of an identified crop, an identified farming condition or an identified operational state or setting of the farming machine, and wherein the identified crop, condition, or state or setting of the machine are identified by the computing system.

15. A method, comprising:
capturing, by a global location system (GPS), a geographic location of a farming machine while it is in a crop field at a first time within a time range;
capturing, by a camera of the machine, an image of a farming situation at a second time within the time range;
linking, by a computing system, the geographic location of the farming machine to the image of the farming situation;
identifying, by the computing system, farming information within the image at a third time within the time range, wherein the farming information comprises at least one of an identified crop, an identified farming condition or an identified operational state or setting of the farming machine; and
linking, by the computing system, the farming information to the image of the farming situation.
